# EUROPEAN PATENT APPLICATION

(11) **EP 4 178 008 A1**
(43) Date of publication of application: **10.05.2023**
(21) Application number: 22197873.7
(22) Date of filing: 26.09.2022
(51) Int. Cl.: H01M 10/613, H01M 10/625, H01M 10/6556, H01M 50/204, H01M 50/244, H01M 50/249, H01M 50/258, H01M 50/271

(54) **BATTERY MODULE AND BATTERY SYSTEM**

(30) Priority: 30.09.2021 US 202163250846 P; 07.09.2022 US 202217939487
(71) Applicant: Xing Power Inc., Victoria, Mahé (SC)
(72) Inventor: HUANG, Yu-Chieh, 114 Taipei (TW); TU, Kai-Hsiang, 114 Taipei (TW); LEE, Hung-Chi, 114 Taipei (TW); HUANG, De-Shiuan, 114 Taipei (TW); SU, Keng-Ta, 114 Taipei (TW)
(74) Representative: Yang, Shu

(57) **Abstract**

A battery module is provided. The battery module includes a battery enclosure and a plurality of cell assemblies. The battery enclosure includes a front plate, a fluid inlet, a fluid outlet, and a plurality of enclosure interfaces. The fluid inlet is disposed on the front plate for a fluid to flow into the battery enclosure. The fluid outlet is disposed on the front plate for the fluid to flow out of the battery enclosure. The plurality of enclosure interfaces is disposed on the front plate. Each of the plurality of cell assemblies has a plurality of assembly electrodes and is installed in the battery enclosure. Each of the plurality of assembly electrodes is respectively coupled to one of the plurality of enclosure interfaces and electrically exposed to an outside of the front plate.

## Description

### FIELD

The present disclosure generally relates to a battery module and, more particularly, to an immersion cooled battery module and battery system.

### BACKGROUND

The development of electric vehicles is progressing rapidly. In order to increase fast charging and slow discharging capability, it is important to manage the heat generated during the charging and discharging processes.

Currently, there are two types of conventional cooled battery packs: a modular cooled battery pack and a non-modular cooled battery pack. The non-modular cooled battery pack may enclose several cell assemblies in one large liquid tank, which may make the pack bulky and heavy. Thus, the non-modular cooled battery pack is difficult to employ on various sizes of vehicle platforms. The modular cooled battery pack may solve the aforementioned problem of the non-modular cooled battery pack by making the liquid tank modularized (e.g., by enclosing each cell assembly in an independent liquid container). However, the modular cooled battery pack may require more connectors (e.g., electrical, mechanical, and liquid connectors) between the modules. Thus, manufacturing a modular cooled battery pack may be problematic due to the additional material costs, complex manufacturing processes, and potential reliability issues associated with such battery packs. Furthermore, another problem of a conventional modular cooled battery module is that, for the various fields of application of the battery, various specification parameters, such as the overall size, shape, voltage, and current associated with the battery, may not be the same.

### SUMMARY

In some implementations of the present disclosure, an immersion cooled battery module may include modules that are easily assembled, for example, during the manufacturing process, and that are adaptable to various members of a product line for different application fields.

In a first aspect of the present disclosure, a battery module includes: a battery enclosure including: a front plate; a fluid inlet disposed on the front plate for a fluid to flow into the battery enclosure; a fluid outlet disposed on the front plate for the fluid to flow out of the battery enclosure; and a plurality of enclosure interfaces disposed on the front plate; and a plurality of cell assemblies each having a plurality of assembly electrodes and installed in the battery enclosure, wherein each of the plurality of assembly electrodes is respectively coupled to one of the plurality of enclosure interfaces and electrically exposed to an outside of the front plate.

In another implementation of the first aspect, the battery enclosure further includes: one or more flow control members, each disposed between two of the plurality of cell assemblies to control the fluid to flow through a fluid passage between the two of the plurality of cell assemblies.

In another implementation of the first aspect, one of the one or more flow control members includes a sealing member neighboring the front plate to obstruct a front passage between two neighboring cell assemblies of the plurality of cell assemblies.

In another implementation of the first aspect, the front passage further includes: a first front opening neighboring the front plate and located at a lower surface of one of the two neighboring cell assemblies of the plurality of cell assemblies; and a second front opening corresponding to the first front opening and located at an upper surface of another of the two neighboring cell assemblies of the plurality of cell assemblies, wherein the sealing member covers the first front opening and the second front opening to prevent the fluid from flowing through the front passage neighboring the front plate.

In another implementation of the first aspect, the fluid passage further includes: a first back opening positioned remotely from the front plate and located at a lower surface of one of the two neighboring cell assemblies of the plurality of cell assemblies; and a second back opening facing the first back opening and located at an upper surface of another of the two neighboring cell assemblies of the plurality of cell assemblies, wherein the sealing member is positioned remotely from the first back opening and the second back opening to allow the fluid to flow through the fluid passage positioned remotely from the front plate.

In another implementation of the first aspect, the sealing member includes a stopper disposed on the front plate to obstruct the front passage between the two neighboring cell assemblies of the plurality of cell assemblies.

In another implementation of the first aspect, the sealing member includes a bulkhead member inserted into the battery enclosure to obstruct the front passage between the two neighboring cell assemblies of the plurality of cell assemblies.

In another implementation of the first aspect, the battery enclosure further includes: a back plate opposite the battery enclosure from the front plate, wherein each of the one or more flow control members neighbors one of the front plate and the back plate and is positioned remotely from another of the front plate and the back plate.

In another implementation of the first aspect, one of the plurality of cell assemblies is sandwiched between two neighboring flow control members of the one or more flow control members when a number of the one or more flow control members is greater than one; and one of the two neighboring flow control members of the one or more flow control members neighbors the front plate when another of the two neighboring flow control members of the one or more flow control members neighbors the back plate.

In another implementation of the first aspect, one of the one or more flow control members is a bulkhead member inserted between two neighboring cell assemblies of the plurality of cell assemblies for separating the two neighboring cell assemblies of the plurality of cell assemblies from each other; and the fluid passage remains unobstructed by a bulkhead opening of the bulkhead member for the fluid to flow from one of the two neighboring cell assemblies of the plurality of cell assemblies to another of the two neighboring cell assemblies of the plurality of cell assemblies through the bulkhead opening

In another implementation of the first aspect, the battery enclosure further includes: a back plate opposite the battery enclosure from the front plate, wherein the bulkhead opening of the bulkhead member is positioned remotely from the front plate and neighbors the back plate.

In another implementation of the first aspect, a specific one of the plurality of cell assemblies is sandwiched between two neighboring flow control members of the one or more flow control members when a number of the one or more flow control members is greater than one; each of the two neighboring flow control members of the one or more flow control members includes a bulkhead opening for the fluid to flow through the bulkhead opening; and the bulkhead opening of one of the two neighboring flow control members of the one or more flow control members neighbors the front plate when the bulkhead opening of another of the two neighboring flow control members of the one or more flow control members is positioned remotely from the front plate.

In another implementation of the first aspect, the plurality of enclosure interfaces includes a plurality of interface holes on the front plate; and each of the plurality of assembly electrodes penetrates respectively through one of the plurality of interface holes to be exposed to the outside of the front plate.

In another implementation of the first aspect, the plurality of enclosure interfaces includes a plurality of connector interfaces on the front plate; and each of the plurality of assembly electrodes is electronically coupled to one of the plurality of connector interfaces.

In another implementation of the first aspect, each of the plurality of enclosure interfaces is respectively coupled to at least one of the plurality of assembly electrodes.

In another implementation of the first aspect, a specific one of the plurality of enclosure interfaces further includes more than one interface region, when the specific one of the plurality of enclosure interfaces is coupled to more than one of the plurality of assembly electrodes; and each of the more than one interface region is coupled to one of the more than one of the plurality of assembly electrodes.

In another implementation of the first aspect, each of the plurality of cell assemblies further includes a monitoring member having a first wiring member and a second wiring member, wherein the first wiring member and the second wiring member are respectively coupled to one of a top cell holder and a bottom cell holder supporting a plurality of battery cells in the plurality of cell assemblies.

In another implementation of the first aspect, each of the fluid inlet and the fluid outlet is coupled to one of a cooling system and an additional module; and the additional module is identical to the battery module.

In another implementation of the first aspect, each of the plurality of cell assemblies further includes: a plurality of battery cells; a bottom cell holder installed below the plurality of battery cells; a top cell holder, wherein the plurality of battery cells is sandwiched between the top cell holder and the bottom cell holder; a bottom connector member including at least one bottom connector plate and installed below the bottom cell holder to connect with the plurality of battery cells; a top connector member including at least one top connector plate and installed on the top cell holder to connect with the plurality of battery cells, wherein two of the at least one bottom connector plate and the at least one top connector plate are output connectors each coupled to one of the plurality of enclosure interfaces; and two cell covers, wherein the at least one bottom connector plate and the at least one top connector plate are sandwiched between the two cell covers.

In another implementation of the first aspect, at least one of the bottom connector member or the top connector member includes a plurality of connector apertures; and a plurality of connecting members connects the plurality of battery cells with the at least one of the bottom connector member or the top connector member through the plurality of connector apertures.

In another implementation of the first aspect, at least one of the bottom cell holder or the top cell holder includes a plurality of holder holes each aligned with one of the plurality of connector apertures; and the plurality of connecting members connects the plurality of battery cells with the at least one of the bottom connector member or the top connector member through the plurality of connector apertures and the plurality of holder holes.

In another implementation of the first aspect, the battery enclosure further includes a battery housing having a plurality of railways on an inner surface of the battery housing; each of the plurality of cell assemblies further includes a plurality of rib members; and the plurality of cell assemblies is removably installed into the battery enclosure by sliding the plurality of rib members into the plurality of railways.

In another implementation of the first aspect, the battery enclosure further includes a plurality of protrusions disposed on the front plate; and the plurality of protrusions of the battery enclosure is removably coupled to a plurality of protrusions of an additional enclosure of an additional module to couple the battery module with the additional module.

In another implementation of the first aspect, each of plurality of cell assemblies includes N battery cells; and the N battery cells are arranged into a plurality of battery groups to control a current of the plurality of cell assemblies.

In another implementation of the first aspect, a system casing, removably coupled to the battery module and a plurality of additional modules and having a side wall, further includes: a casing inlet disposed on the side wall for the fluid to flow into the system casing; a casing outlet disposed on the side wall for the fluid to flow out of the system casing; and two casing interfaces disposed on the side wall.

In another implementation of the first aspect, the system casing further includes a plurality of casing passages; a first one of the plurality of casing passages is coupled to the casing inlet and one of the battery module and the plurality of additional modules; a second one of the plurality of casing passages is coupled to the casing outlet and the one of the battery module and the plurality of additional modules; and the others of the plurality of casing passages are coupled to two of the others of the battery module and the plurality of additional modules.

In a second aspect of the present disclosure, a battery device includes: a battery housing; a plurality of cell assemblies each having a plurality of assembly electrodes and installed in the battery housing; and a battery plate coupled to the battery housing to cover the plurality of cell assemblies and further including: a plurality of enclosure interfaces disposed on an outer surface of the battery plate, wherein the plurality of assembly electrodes of the plurality of cell assemblies is respectively coupled to one of the plurality of enclosure interfaces to be electrically exposed to an outside of the outer surface.

In another implementation of the second aspect, the battery plate further includes: a fluid inlet disposed on the outer surface of the battery plate for a fluid to flow into the battery housing; and a fluid outlet disposed on the outer surface of the battery plate for the fluid to flow out of the battery housing.

An implementation of the second aspect further includes all of the above implementations of the first aspect.

In a third aspect of the present disclosure, a battery system includes: a system casing including: a side wall; a casing inlet disposed on the side wall for a fluid to flow into the system casing; a casing outlet disposed on the side wall for the fluid to flow out of the system casing; and two casing interfaces disposed on the side wall; and a plurality of battery modules each including a battery enclosure and a plurality of cell assemblies, wherein, for each of the plurality of battery modules: each of the plurality of cell assemblies has a plurality of assembly electrodes and is installed in the battery enclosure, wherein the plurality of assembly electrodes is electrically coupled to the two casing interfaces, and the battery enclosure includes: an outer surface; and a plurality of enclosure interfaces disposed on the outer surface and each coupled to a corresponding one of the plurality of assembly electrodes of the plurality of cell assemblies.

An implementation of the third aspect further includes all of the above implementations of the first aspect.

### BRIEF DESCRIPTION OF THE DRAWINGS

The present disclosure will be better understood from the following detailed description read in light of the accompanying drawings, where:
FIG. 1 is an illustration of an example battery module according to an implementation of the present disclosure.
FIG. 2A and FIG. 2B are illustrations of an example flow control structure of the battery module illustrated in FIG. 1 according to an implementation of the present disclosure.
FIG. 3A and FIG. 3B are illustrations of an example flow passage of the battery module illustrated in FIG. 1 according to an implementation of the present disclosure.
FIG. 4A and FIG. 4B illustrate perspective views of a battery module according to an implementation of the present disclosure.
FIG. 5 illustrates a partial exploded view of a battery module according to an implementation of the present disclosure.
FIG. 6A illustrates a side view of the cell assemblies and the front plate illustrated in FIG. 5 according to an implementation of the present disclosure.
FIG. 6B illustrates an enlarged view of a region A illustrated in FIG. 6A according to an implementation of the present disclosure.
FIG. 7 illustrates a partial exploded view of a battery module according to an implementation of the present disclosure.
FIG. 8A illustrates a side view of the cell assemblies, the flow control member, and the front plate illustrated in FIG. 7 according to an implementation of the present disclosure.
FIG. 8B illustrates an enlarged view of a region B illustrated in FIG. 8A according to an implementation of the present disclosure.
FIG. 9A illustrates a side view of the cell assemblies, the flow control member, and the front plate illustrated in FIG. 7 according to an implementation of the present disclosure.
FIG. 9B and FIG. 9C are illustrations of an example flow control member having a bulkhead opening according to an implementation of the present disclosure.
FIG. 10 illustrates a perspective view of two cell assemblies illustrated in FIG. 5 according to an implementation of the present disclosure.
FIG. 11 illustrates an exploded view of the cell assembly illustrated in FIG. 10 according to an implementation of the present disclosure.
FIG. 12 illustrates a perspective view of the top cell holder illustrated in FIG. 11 according to an implementation of the present disclosure.
FIG. 13A and FIG. 13B illustrate perspective views of the bottom connector member and the top connector member illustrated in FIG. 11 according to an implementation of the present disclosure.
FIG. 14A illustrates an exploded view of the cell assembly illustrated in FIG. 10 according to an implementation of the present disclosure.
FIG. 14B is an illustration of an example electrical connection of the battery cell according to an implementation of the present disclosure.
FIG. 15 is an illustration of an example connection relationship between the bottom connector member and the top connector member illustrated in FIG. 14A according to an implementation of the present disclosure.
FIG. 16A illustrates a perspective view of the battery housing illustrated in FIG. 4 according to an implementation of the present disclosure.
FIG. 16B and FIG. 16C respectively illustrate front views of the battery housing and front plate illustrated in FIG. 4 according to an implementation of the present disclosure.
FIG. 17 illustrates a front view of two battery housings illustrated in FIG. 16B according to an implementation of the present disclosure.
FIG. 18A illustrates a perspective view of a cell assembly according to an implementation of the present disclosure.
FIG. 18B illustrates a front view of the battery housing illustrated in FIG. 16B according to an implementation of the present disclosure.
FIG. 19A illustrates a partial enlarged view of the right side of the cell assembly illustrated in FIG. 18A according to an implementation of the present disclosure.
FIG. 19B illustrates an enlarged view of a region C illustrated in FIG. 19A according to an implementation of the present disclosure.
FIG. 20 illustrates a perspective view of a battery system according to an implementation of the present disclosure.
FIG. 21 illustrates a perspective view of the battery system illustrated in FIG. 20 without the system cover according to an implementation of the present disclosure.
FIG. 22 illustrates a perspective view of a portion of elements in the battery system for illustrating an electrical connection of the battery system illustrated in FIG. 20 according to an implementation of the present disclosure.
FIG. 23 illustrates a perspective view of a portion of elements in the battery system for illustrating a fluid flow of the battery system illustrated in FIG. 20 according to an implementation of the present disclosure.

### DETAILED DESCRIPTION

The following disclosure contains specific information pertaining to exemplary implementations in the present disclosure. The drawings in the present disclosure and their accompanying detailed disclosure are directed to merely exemplary implementations. However, the present disclosure is not limited to merely these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For the purposes of consistency and ease of understanding, like features are identified (although, in some examples, not shown) by numerals in the exemplary figures. However, the features in different implementations may be different in other respects, and thus shall not be narrowly confined to what is shown in the figures.

The disclosure uses the phrases "in one implementation," "in some implementations," and so on, which may each refer to one or more of the same or different implementations. The term "coupled" is defined as connected, directly or indirectly through intervening components and is not necessarily limited to physical connections. The term "comprising" means "including, but not necessarily limited to;" it specifically indicates open-ended inclusion or membership in the so-described combination, group, series and the equivalent.

Additionally, for the purposes of explanation and non-limitation, specific details, such as functional entities, techniques, protocols, standard, and the like, are set forth for providing an understanding of the described technology. In other examples, detailed disclosure of well-known methods, technologies, systems, architectures, and the like are omitted so as not to obscure the disclosure with unnecessary details.

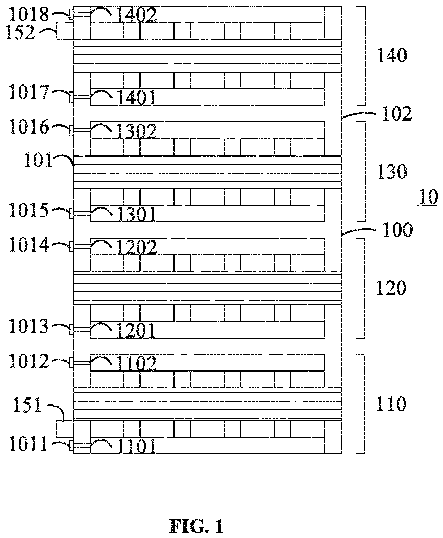

FIG. 1 is an illustration of an example battery module 10 according to an implementation of the present disclosure. The battery module 10 includes a battery enclosure 100 and a plurality of cell assemblies installed in the battery enclosure 100. The battery enclosure 100 may have a front plate 101 and a back plate 102. The battery enclosure 100 may further include a fluid inlet 151, a fluid outlet 152, and a plurality of enclosure interfaces. In some implementations, the battery enclosure 100 may further include a battery housing (not shown) covered by two battery plates, such as the front plate 101 and the back plate 102, and the cell assemblies may be installed in the battery housing. In some implementations the fluid inlet 151 may be disposed at the bottom of the front plate 101, and the fluid outlet 152 may be disposed at the top of the front plate 101. Thus, the fluid may flow into the battery module 10 from the bottom of the battery module 10 and flow out of the battery module 10 from the top of the battery module 10. In some implementations, the battery module 10 may also be a battery device.

In some implementations, the number of the cell assemblies may be greater than or equal to two. For example, the number of the cell assemblies may be equal to two, three, four, or other positive numbers. In some implementations, in FIG. 1, the number of the cell assemblies may be equal to four, and the cell assemblies may be a first to a fourth cell assemblies 110-140. In some implementations, the number of the enclosure interfaces may be greater than or equal to two and greater than or equal to the number of the cell assemblies. For example, the number of the enclosure interfaces may be equal to two, three, four, five, six, or other positive numbers. In FIG. 1, the number of the enclosure interfaces may be equal to eight, and the enclosure interfaces may be a first to an eighth enclosure interfaces 1011-1018. In addition, in FIG. 1, the number of the enclosure interfaces 1011-1018 may be twice as many as the number of the cell assemblies 110-140, since each of the cell assemblies 110-140 may correspond to two of the enclosure interfaces 1011-1018.

In some implementations, the fluid inlet 151 may be disposed on the front plate 101 for a fluid to flow into the battery enclosure 100. The fluid outlet 152 may be disposed on the front plate 101 for the fluid to flow out of the battery enclosure 100. In some implementations, the fluid inlet 151 may be disposed on an outer surface of the front plate 101 for the fluid to flow into the battery enclosure 100, and the fluid outlet 152 may be disposed on the outer surface of the front plate 101 for the fluid to flow out of the battery enclosure 100. The battery module 10 may be coupled to a fluid cooling thermal management system (not shown). The fluid may flow from the fluid cooling thermal management system into the battery module 10 through the fluid inlet 151. The cell assemblies 110-140 may be immersed in the fluid when the fluid is poured into the battery module 10. The fluid cooling thermal management system may control a temperature of the battery module 10 by the fluid to prevent the battery module 10 from overheating. After flowing through the whole of the battery module 10, the fluid may flow out of the battery module 10 through the fluid outlet 152 and back to the fluid cooling thermal management system.

In some implementations, the enclosure interfaces 1011-1018 may be disposed on the front plate 101. In some implementations, the enclosure interfaces 1011-1018 may be disposed on the outer surface of the front plate 101. In addition, each of the cell assemblies 110-140 may have a plurality of assembly electrodes. In some implementations, the number of the assembly electrodes in one of the cell assemblies may be greater than or equal to two. For example, the number of the assembly electrodes in one of the cell assemblies may be equal to two, four, six, or other positive numbers. In FIG. 1, the number of the assembly electrodes in one of the cell assemblies 110-140 may be equal to two. Thus, the first cell assembly 110 may have a first assembly electrode 1101 and a second assembly electrode 1102, the second cell assembly 120 may have a third assembly electrode 1201 and a fourth assembly electrode 1202, the third cell assembly 130 may have a fifth assembly electrode 1301 and a sixth assembly electrode 1302, and the fourth cell assembly 140 may have a seventh assembly electrode 1401 and an eighth assembly electrode 1402.

In some implementations, each of the assembly electrodes may be respectively coupled to one of the enclosure interfaces and each of the enclosure interfaces may be respectively coupled to one of the assembly electrodes. Thus, the number of the enclosure interfaces may be twice as much as the number of the cell assemblies when the number of assembly electrodes for each of the cell assemblies is equal to two. In FIG. 1, each of the assembly electrodes 1101, 1102, 1201, 1202, 1301, 1302, 1401, and 1402 may be respectively coupled to only one of the enclosure interfaces 1011-1018, and each of the enclosure interfaces 1011-1018 may be respectively coupled to only one of the assembly electrodes 1101, 1102, 1201, 1202, 1301, 1302, 1401, and 1402. Thus, the number of the enclosure interfaces 1011-1018 may be twice as many as the number of the cell assemblies 110-140.

In some implementations, each of the enclosure interfaces may be respectively coupled to at least one of the assembly electrodes. A specific one of the enclosure interfaces may further include more than one interface region, when the specific enclosure interface is coupled to more than one of the assembly electrodes. Each of the more than one interface region in the specific enclosure interface may be coupled to one of the more than one of the assembly electrodes. For example, the specific enclosure interface may have two interface regions and couple to two of the assembly electrodes. Thus, each of the two interface regions in the specific enclosure interface may couple to one of the two assembly electrodes. Therefore, the number of the enclosure interfaces in the battery module 10 may be equal to two, three, four, five, or other positive numbers. For example, the battery module 10 may include two cell assemblies 110 and 120 and three enclosure interfaces. In some implementations, one of the two assembly electrodes in the cell assembly 110 may be coupled to one of the three enclosure interfaces, one of the two assembly electrodes in the cell assembly 120 may be coupled to another of the three enclosure interfaces, and the other of the two assembly electrodes of the cell assembly 110 and the other of the two assembly electrodes of the cell assembly 120 may be commonly coupled to the other of the three enclosure interfaces. In some implementations, a size of an enclosure interface coupled to more than one assembly electrode may be greater than a size of another enclosure interface coupled to only one assembly electrode.

In some implementations, the assembly electrodes may be exposed to the outside of the front plate 101. In some implementations, the assembly electrodes may be exposed to the outside of the outer surface of the front plate 101. In some implementations, the enclosure interfaces may be a plurality of interface holes on the front plate 101, and each of the assembly electrodes may penetrate respectively through one of the enclosure interfaces. Thus, the assembly electrodes may be directly exposed to the outside of the front plate 101 since the assembly electrodes directly penetrate through the enclosure interfaces to be exposed to the outside of the front plate 101. For example, the enclosure interfaces 1011-1018 may be the interface holes on the front plate 101, and each of the assembly electrodes 1101, 1102, 1201, 1202, 1301, 1302, 1401, and 1402 may penetrate respectively through one of the enclosure interfaces 1011-1018 of the front plate 101. Thus, the assembly electrodes 1101, 1102, 1201, 1202, 1301, 1302, 1401, and 1402 may be exposed from the interface holes to the outside of the front plate 101.

In some implementations, the enclosure interfaces may be a plurality of connector interfaces on the front plate 101, and each of the assembly electrodes may be electronically coupled to one of the plurality of connector interfaces. Thus, each of the assembly electrodes of the cell assemblies may be electrically exposed to the outside of the front plate 101, since each of the assembly electrodes is engaged with one of the enclosure interfaces. For example, the enclosure interfaces 1011-1018 may be the connector interfaces on the front plate 101, and each of the assembly electrodes 1101, 1102, 1201, 1202, 1301, 1302, 1401, and 1402 may be electronically coupled to one of the plurality of connector interfaces. Thus, the assembly electrodes 1101, 1102, 1201, 1202, 1301, 1302, 1401, and 1402 of the cell assemblies 110-140 may be electrically exposed to the outside of the front plate 101, since each of the assembly electrodes 1101, 1102, 1201, 1202, 1301, 1302, 1401, and 1402 is engaged with one of the enclosure interfaces 1011-1018.

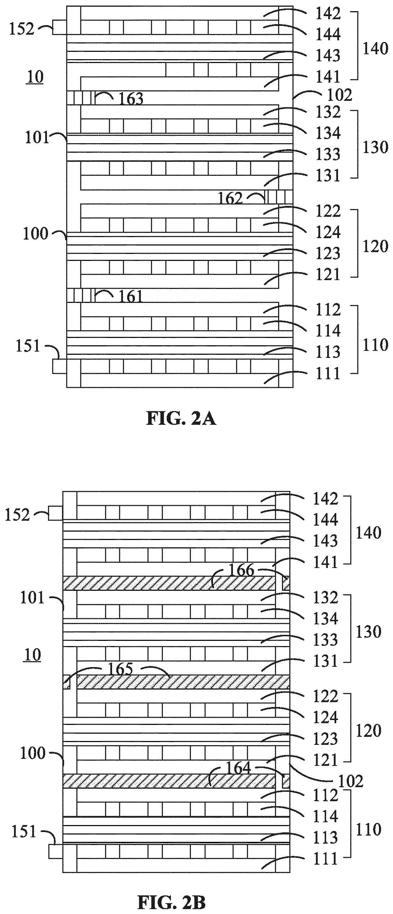

FIG. 2A and FIG. 2B are illustrations of an example flow control structure of the battery module 10 illustrated in FIG. 1 according to an implementation of the present disclosure. The battery module 10 includes the battery enclosure 100 and the plurality of cell assemblies 110-140 installed in the battery enclosure 100. The battery enclosure 100 may have the front plate 101 and the back plate 102. The front plate 101 of the battery enclosure 100 may further include the fluid inlet 151, the fluid outlet 152, and the enclosure interfaces (not shown). In order to clearly illustrate a fluid flowing operation of the battery module 10, FIG. 2A and FIG. 2B omit the assembly electrodes and the enclosure interfaces in FIG. 1, but the battery module 10 in FIG. 2A and FIG. 2B still includes the assembly electrodes and the enclosure interfaces. The battery enclosure 100 may further include at least one flow control member. The battery enclosure 100 in FIG. 2A may further include three flow control members 161-163, and the battery enclosure 100 in FIG. 2B may further include three flow control members 164-166. In order to clearly illustrate an electronic connection of the battery module 10, FIG. 1 omits the at least one flow control member shown in FIG. 2A and in FIG. 2B, but the battery enclosure 100 in FIG. 1A still includes the at least one flow control member shown in FIG. 2A and in FIG. 2B.

In some implementations, each of the at least one flow control member may be disposed between two of the plurality of cell assemblies 110-140 to control the fluid to flow through a fluid passage (not shown) between the two of the plurality of cell assemblies 110-140. In some implementations, each of the at least one flow control member may be a sealing member neighboring one of the front plate 101 and the back plate 102 to obstruct the fluid passage between two neighboring cell assemblies. The number of the at least one flow control member may be determined based on the number of the cell assemblies. For example, the number of the at least one flow control member may be determined by subtracting one from the number of the cell assemblies. Thus, the number of the at least one flow control member may be equal to one when the number of the cell assemblies is equal to two. In addition, the number of the at least one flow control member may be greater than one when the number of the cell assemblies is greater than two.

In some implementations, the cell assemblies 110-140 may include a first to a fourth bottom cover 111, 121, 131, and 141, a first to a fourth top cover 112, 122, 132, and 142, a first to a fourth cell holder 113, 123, 133, and 143, and a first plurality to a fourth plurality of battery cells 114, 124, 134, and 144. The battery cells 114, 124, 134, and 144 may be held respectively by a corresponding one of the cell holders 113, 123, 133, and 143. Each of the cell holders 113, 123, 133, and 143 may include a center holder to accommodate the corresponding battery cells, such as the cell holders 113, 123, 133, and 143 in FIG. 2A and FIG. 2B. In another implementation, each of the cell holders 113, 123, 133, and 143 may include two terminal holders to fix the corresponding battery cells by pressing two sides of each corresponding battery cell. In other implementations, some of the cell holders 113, 123, 133, and 143 may respectively include the two terminal holders and the others of the cell holders 113, 123, 133, and 143 may respectively include the center holder.

In some implementations, the number of the battery cells in each of the cell assemblies 110-140 may be equal to each other. In another implementation, the number of the battery cells in one of the cell assemblies 110-140 may be different from the number of the battery cells in others of the cell assemblies 110-140.

In some implementations, each of the bottom covers 111, 121, 131, and 141 may be located at the bottom of the corresponding one of the cell assemblies 110-140, and each of the top covers 112, 122, 132, and 142 may be located at the top of the corresponding one of the cell assemblies 110-140. Thus, each of the cell holders 113, 123, 133, and 143 and the battery cells 114, 124, 134, and 144 may be sandwiched between the corresponding one of the bottom covers 111, 121, 131, and 141 and the corresponding one of the top covers 112, 122, 132, and 142.

In some implementations, the sealing member may be a stopper disposed on one of the front plate 101 and the back plate 102 to obstruct the fluid passage between the two neighboring ones of the plurality of cell assemblies 110-140. In some implementations, the sealing member is a bulkhead member inserted into the battery enclosure 100 to obstruct the fluid passage between two neighboring ones of the plurality of cell assemblies 110-140. In some implementations, the fluid passage may be a front passage when the fluid passage neighbors the front plate 101 and is positioned remotely from the back plate 102. In addition, the fluid passage may be a back passage when the fluid passage neighbors the back plate 102 and is positioned remotely from the front plate 101.

In some implementations, in FIG. 2A, each of the three flow control members 161-163 may be the sealing member neighboring one of the front plate 101 and the back plate 102 to obstruct the fluid passage between two neighboring ones of the cell assemblies 110-140. The first flow control member 161 neighboring the front plate 101 may be disposed between the first top cover 112 of the first cell assembly 110 and the second bottom cover 121 of the second cell assembly 120 to obstruct the front passage between the two neighboring cell assemblies 110 and 120, the second flow control member 162 neighboring the back plate 102 may be disposed between the second top cover 122 of the second cell assembly 120 and the third bottom cover 131 of the third cell assembly 130 to obstruct the back passage between the two neighboring cell assemblies 120 and 130, and the third flow control member 163 neighboring the front plate 101 may be disposed between the third top cover 132 of the third cell assembly 130 and the fourth bottom cover 141 of the fourth cell assembly 140 to obstruct the front passage between the two neighboring cell assemblies 130 and 140.

In some implementations, in FIG. 2B, each of the three flow control members 164-166 may be the sealing member inserted into the battery enclosure 100 to obstruct the fluid passage between two neighboring ones of the cell assemblies 110-140. The fourth flow control member 164 may be inserted between the first top cover 112 of the first cell assembly 110 and the second bottom cover 121 of the second cell assembly 120 to obstruct the front passage between the two neighboring cell assemblies 110 and 120, the fifth flow control member 165 may be inserted between the second top cover 122 of the second cell assembly 120 and the third bottom cover 131 of the third cell assembly 130 to obstruct the back passage between the two neighboring cell assemblies 120 and 130, and the sixth flow control member 166 may be inserted between the third top cover 132 of the third cell assembly 130 and the fourth bottom cover 141 of the fourth cell assembly 140 to obstruct the front passage between the two neighboring cell assemblies 130 and 140.

In some implementations, some of the at least one flow control member in the battery enclosure 100 may be the stoppers, and the others of the at least one flow control member in the battery enclosure 100 may be the bulkhead member. For example, in order to generate the battery module 10, the fourth flow control member 164 neighboring the front plate 101 may be disposed between the first cell assembly 110 and the second cell assembly 120 to obstruct the front passage between the two neighboring cell assemblies 110 and 120, the fifth flow control member 165 may be inserted between the second cell assembly 120 and the third cell assembly 130 to obstruct the back passage between the two neighboring cell assemblies 120-130, and the third flow control member 163 neighboring the front plate 101 may be disposed between the third cell assembly 130 and the fourth cell assembly 140 to obstruct the front passage between the two neighboring cell assemblies 130-140.

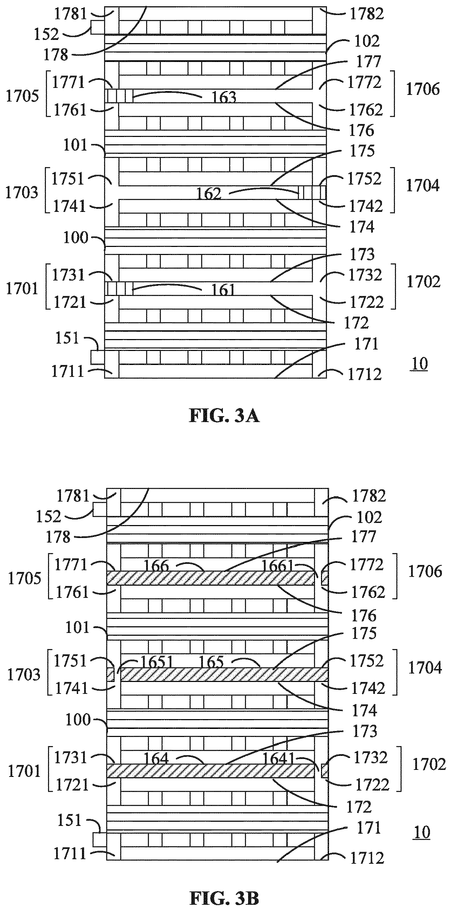

FIG. 3A and FIG. 3B are illustrations of an example flow passage of the battery module 10 illustrated in FIG. 1 according to an implementation of the present disclosure. The battery module 10 includes the battery enclosure 100 and the plurality of cell assemblies 110-140 installed in the battery enclosure 100. The battery enclosure 100 may have the front plate 101 and the back plate 102. The front plate 101 of the battery enclosure 100 may further include the fluid inlet 151, the fluid outlet 152, and the enclosure interfaces (not shown). In order to clearly illustrate a fluid flowing operation of the battery module 10, FIG. 3A and FIG. 3B also omit the assembly electrodes and the enclosure interfaces in FIG. 1, but the battery module 10 in FIG. 3 A and FIG. 3B may still include the assembly electrodes and the enclosure interfaces. The battery enclosure 100 may further include at least one flow control member. The battery enclosure 100 in FIG. 3A may further include three flow control members 161-163, and the battery enclosure 100 in FIG. 3B may further include three flow control members 164-166.

With further reference to FIG. 2A, FIG. 2B, FIG. 3A, and FIG. 3B, a first front opening neighboring the front plate 101 may be formed between the front plate 101 and each of the bottom covers 111, 121, 131, and 141, and a first back opening neighboring the back plate 102 may be formed between the back plate 102 and each of the bottom covers 111, 121, 131, and 141. In addition, a second front opening neighboring the front plate 101 may be formed between the front plate 101 and each of the top covers 112, 122, 132, and 142, and a second back opening neighboring the back plate 102 may be formed between the back plate 102 and each of the top covers 112, 122, 132, and 142.

In some implementations, each of the bottom covers 111, 121, 131, and 141 may include a corresponding one of lower surfaces 171, 173, 175, and 177, and each of the top covers 112, 122, 132, and 142 may include a corresponding one of upper surfaces 172, 174, 176, and 178. In some implementations, the first front opening 1711 neighboring the front plate 101 may be located at the lower surface 171 of the cell assembly 110, and the first back opening 1712 remotely positioned from the front plate 101 and neighboring the back plate 102 may be located at the lower surface 171 of the cell assembly 110. In some implementations, the second front opening 1781 neighboring the front plate 101 may be located at the upper surface 178 of the cell assembly 140, and the second back opening 1782 remotely positioned from the front plate 101 and neighboring the back plate 102 may be located at the upper surface 178 of the cell assembly 140.

In some implementations, the first front opening 1731 neighboring the front plate 101 may be located at the lower surface 173 of the cell assembly 120, and the second front opening 1721 neighboring the front plate 101 may be located at the upper surface 172 of the cell assembly 110. Since the cell assemblies 110 and 120 are two neighboring cell assemblies, the first front opening 1731 corresponds to the second front opening 1721 to generate a front passage 1701. In addition, the first back opening 1732 positioned remotely from the front plate 101 and neighboring the back plate 102 may be located at the lower surface 173 of the cell assembly 120, and the second back opening 1722 positioned remotely from the front plate 101 and neighboring the back plate 102 may be located at the upper surface 172 of the cell assembly 110. Since the cell assemblies 110 and 120 are two neighboring cell assemblies, the first back opening 1732 corresponds to the second back opening 1722 to generate a back passage 1702.

In some implementations, since the cell assemblies 120 and 130 are two neighboring cell assemblies, the first front opening 1751 located at the lower surface 175 of the cell assembly 130 corresponds to the second front opening 1741 located at the upper surface 174 of the cell assembly 120 to generate a front passage 1703 and the first back opening 1752 located at the lower surface 175 of the cell assembly 130 corresponds to the second back opening 1742 located at the upper surface 174 of the cell assembly 120 to generate a back passage 1704. In some implementations, since the cell assemblies 130 and 140 are two neighboring cell assemblies, the first front opening 1771 located at the lower surface 177 of the cell assembly 140 corresponds to the second front opening 1761 located at the upper surface 176 of the cell assembly 130 to generate a front passage 1705 and the first back opening 1772 located at the lower surface 177 of the cell assembly 140 corresponds to the second back opening 1762 located at the upper surface 176 of the cell assembly 130 to generate a back passage 1706.

In some implementations, the flow control member may be the sealing member covering the first front opening 1731 and the second front opening 1721 to prevent the fluid from flowing through the front passage 1701 neighboring the front plate 101. In one implementation, the first flow control member 161 may be positioned remotely from the first back opening 1732 and the second back opening 1722 to allow the fluid to flow through the back passage 1702 positioned remotely from the front plate 101. In other implementations, the fourth flow control member 164 may include a bulkhead opening 1641 for the first back opening 1732 and the second back opening 1722 to allow the fluid to flow through the back passage 1702 positioned remotely from the front plate 101. In some implementations, the flow control member may be the sealing member covering the first back opening 1752 and the second back opening 1742 to prevent the fluid from flowing through the back passage 1704 neighboring the back plate 102. In one implementation, the second flow control member 162 may be positioned remotely from the first front opening 1751 and the second front opening 1741 to allow the fluid to flow through the front passage 1703 positioned remotely from the back plate 102. In other implementations, the fifth flow control member 165 may include a bulkhead opening 1651 for the first front opening 1751 and the second front opening 1741 to allow the fluid to flow through the front passage 1703 positioned remotely from the back plate 102. In some implementations, the flow control member may be the sealing member covering the first front opening 1771 and the second front opening 1761 to prevent the fluid from flowing through the front passage 1705 neighboring the front plate 101. In one implementation, the third flow control member 163 may be positioned remotely from the first back opening 1772 and the second back opening 1762 to allow the fluid to flow through the back passage 1706 positioned remotely from the front plate 101. In other implementations, the sixth flow control member 166 may include a bulkhead opening 1661 for the first back opening 1772 and the second back opening 1762 to allow the fluid to flow through the back passage 1706 positioned remotely from the front plate 101.

In some implementations, the back plate 102 is positioned at an opposing end of the battery module 10 from the front plate 101. In FIG. 3A, each of the flow control members 161-163 neighbors one of the front plate 101 and the back plate 102 and is positioned remotely from the other of the front plate 101 and the back plate 102. For example, the flow control members 161 and 163 neighbor the front plate 101 and are positioned remotely from the back plate 102. In addition, the flow control member 162 neighbors the back plate 102 and is positioned remotely from the front plate 101.

In some implementations, one of the plurality of cell assemblies may be sandwiched between two neighboring ones of the at least one flow control member when the number of the at least one flow control member is greater than one. In addition, one of the two neighboring flow control members neighbors the front plate 101 when the other of the two neighboring flow control members neighbors the back plate 102. With further reference to FIG. 2A and FIG. 3A, the cell assembly 120 may be sandwiched between two neighboring flow control members 161 and 162. The first flow control member 161 neighbors the front plate 101 when the second flow control member 162 neighbors the back plate 102. In addition, the cell assembly 130 may be sandwiched between two neighboring flow control members 162 and 163. The third flow control member 163 neighbors the front plate 101 when the second flow control member 162 neighbors the back plate 102.

In some implementations, the at least one flow control member may be a bulkhead member inserted between two neighboring cell assemblies for separating the two neighboring cell assemblies from each other. In addition, the fluid passage remains unobstructed by a bulkhead opening of the bulkhead member for the fluid to flow from one of the two neighboring cell assemblies to the other of the two neighboring cell assemblies through the bulkhead opening. With further reference to FIG. 2B and FIG. 3B, the fourth flow control member 164 may be the bulkhead member inserted between the cell assemblies 110 and 120 for separating the cell assemblies 110 and 120 from each other, and the back passage 1702 remains unobstructed by the bulkhead opening 1641 of the fourth flow control member 164 for the fluid to flow from the cell assembly 110 to the cell assembly 120 through the bulkhead opening 1641. The bulkhead opening 1641 may be positioned remotely from the front plate 101 and neighbor the back plate 102.

In addition, the fifth flow control member 165 may be the bulkhead member inserted between the cell assemblies 120 and 130 for separating the cell assemblies 120 and 130 from each other, and the front passage 1703 remains unobstructed by the bulkhead opening 1651 of the fifth flow control member 165 for the fluid to flow from the cell assembly 120 to the cell assembly 130 through the bulkhead opening 1651. The bulkhead opening 1651 may be positioned remotely from the back plate 102 and neighbor the front plate 101. Furthermore, the sixth flow control member 166 may be the bulkhead member inserted between the cell assemblies 130 and 140 for separating the cell assemblies 130 and 140 from each other, and the back passage 1706 remains unobstructed by the bulkhead opening 1661 of the sixth flow control member 166 for the fluid to flow from the cell assembly 130 to the cell assembly 140 through the bulkhead opening 1661. The bulkhead opening 1661 may be positioned remotely from the front plate 101 and neighbor the back plate 102.

In some implementations, one of the plurality of cell assemblies may be sandwiched between two neighboring ones of the at least one flow control member when the number of the at least one flow control member is greater than one. Each of the two neighboring flow control members includes a bulkhead opening for the fluid to flow through the bulkhead opening. In addition, one of the two bulkhead openings in the two neighboring flow control members neighbors the front plate 101 when the other of the two bulkhead openings in the two neighboring flow control members neighbors the back plate 102. With further reference to FIG. 2B and FIG. 3B, the cell assembly 120 may be sandwiched between two neighboring flow control members 164 and 165. The bulkhead opening 1651 of the fifth flow control member 165 neighbors the front plate 101 when the bulkhead opening 1641 of the fourth flow control member 164 neighbors the back plate 102. In addition, the cell assembly 130 may be sandwiched between two neighboring flow control members 165 and 166. The bulkhead opening 1651 of the fifth flow control member 165 neighbors the front plate 101 when the bulkhead opening 1661 of the sixth flow control member 166 neighbors the back plate 102.

With reference to FIG. 2A, FIG. 2B, FIG. 3A and FIG. 3B, the fluid may flow into the fluid inlet 151 and flow out of the battery enclosure 100 from the fluid outlet 152. In addition, the front passage 1701 may be obstructed and the back passage 1702 remains unobstructed. Thus, before the fluid flows from the cell assembly 110 to the cell assembly 120 by passing the back passage 1702, the cell assembly 110 may be filled with the fluid and the fluid may flow through all of the battery cells 114 in the cell assembly 110. Similarly, before the fluid flows from the cell assembly 120 to the cell assembly 130 by passing the front passage 1703, the cell assembly 120 may be filled with the fluid and the fluid may flow through all of the battery cells 124 in the cell assembly 120. Before the fluid flows from the cell assembly 130 to the cell assembly 140 by passing the back passage 1706, the cell assembly 130 may filled with the fluid and the fluid may flow through all of the battery cells 134 in the cell assembly 130. Before the fluid flows out of the battery enclosure 100 from the cell assembly 140 by passing the fluid outlet 152, the cell assembly 140 may filled with the fluid and the fluid may flow through all of the battery cells 144 in the cell assembly 140. Thus, the fluid may flow through all of the cell assembly 110-140 in sequence. Therefore, the temperature control of the battery cells 114, 124, 134, and 144 may be improved and the temperature distribution of the battery cells 114, 124, 134, and 144 may be uniform.

In some implementations, with reference to FIG. 2B and FIG. 3B, the number of the cell assemblies may be equal to three, five, seven, or more. In some implementations, the battery module 10 may include two flow control members to separate two neighboring cell assemblies and the two flow control members may respectively have a bulkhead opening. In addition, one of the bulkhead openings in the two flow control members separating the two neighboring cell assemblies may neighbor the front plate 101 and the other of the bulkhead openings in the two flow control members may neighbor the back plate 102. For example, there may be two flow control members disposed between the cell assemblies 110 and 120. In some implementations, one of the two flow control members between the cell assemblies 110 and 120 may include the bulkhead opening neighboring the back plate 102, and the other of the two flow control members between the cell assemblies 110 and 120 may include the bulkhead opening neighboring the front plate 101. Thus, an assembly inlet for the cell assembly 120 may still neighbor the front plate 101. In some implementations, there may also be two flow control members disposed between the cell assemblies 120 and 130 and an assembly inlet for the cell assembly 130 may still neighbor the front plate 101. However, an assembly outlet for the cell assembly 130 may neighbor the back plate 102. In some implementations, in order to make sure that the fluid may flow out of the battery module 10 from the fluid outlet 152, there may be a flow control member above the cell assembly 130. Thus, the fluid may flow out of the cell assembly 130 from a bulkhead opening of the flow control member above the cell assembly 130 and then flow out of the battery module 10 through the fluid outlet 152.

In some implementations, with reference to FIG. 2B and FIG. 3B, the number of the cell assemblies may be equal to three, five, seven, or more. In some implementations, the battery module 10 may include one flow control member to separate two neighboring cell assemblies and the one flow control member may have one or two bulkhead openings. In some implementations, the bulkhead opening may neighbor the back plate 102 when the one flow control member separating the two neighboring cell assemblies has one bulkhead opening. In addition, one of the two bulkhead openings may neighbor the back plate 102 and the other of the two bulkhead openings may neighbor the front plate 101 when the one flow control member separating the two neighboring cell assemblies has two bulkhead openings. In some implementations, for example, the battery module 10 may include three cell assemblies 110-130. There may be a flow control member 164 separating the cell assemblies 110 and 120 and another flow control member 165 separating the cell assemblies 120 and 130. The flow control member 164 may include a bulkhead opening 1641 neighboring the back plate 102, and the flow control member 165 may include two bulkhead openings 1651 respectively neighboring the front plate 101 and the back plate 102. Therefore, before the fluid flows from the cell assembly 110 to the cell assembly 120 by passing the back passage 1702, the cell assembly 110 may be filled with the fluid and the fluid may flow through all of the battery cells 114 in the cell assembly 110. In some implementations, since the two bulkhead openings 1651 respectively neighbor the front plate 101 and the back plate 102, the fluid may flow into the cell assembly 130 through the front passage 1703 and the back passage 1704. Since the fluid may flow into the cell assembly 130 through the back passage 1704, the fluid may still flow fully through the battery cells 134 neighboring the back plate 102. In addition, since the fluid may flow out of the cell assembly 120 through the front passage 1703, the fluid may still flow fully through the battery cells 124 neighboring the front plate 101. Therefore, the fluid may fully flow through the battery cells 114, 124, and 134 to efficiently control the temperatures of the battery module 10.

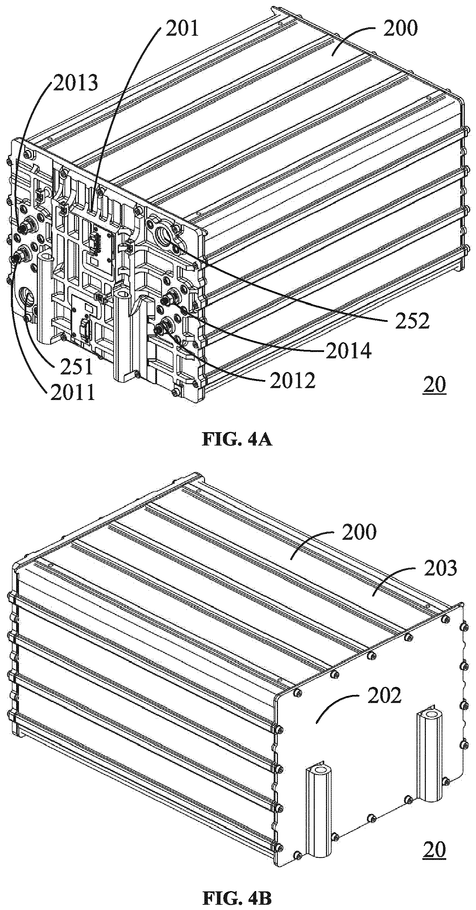

FIG. 4A and FIG. 4B illustrate perspective views of a battery module according to an implementation of the present disclosure. The battery module 20 may include a battery enclosure 200. The battery enclosure 200 may further include a front plate 201 and a back plate 202. The battery module 20 may further include a plurality of cell assemblies installed in the battery enclosure 200. The battery enclosure 200 may further include a fluid inlet 251, a fluid outlet 252, and a plurality of enclosure interfaces 2011-2014. In some implementations, the battery module 20 may also be a battery device.

In FIG. 4A, the number of the enclosure interfaces 2011-2014 may be equal to four. In some implementations, the number of the enclosure interfaces may be equal to two, four, six, or other positive numbers. In some implementations, each of the cell assemblies may include a plurality of assembly electrodes. The number of the assembly electrodes in one of the cell assemblies may be equal to two, four, six, or other positive numbers. In some implementations, each of the enclosure interfaces 2011-2014 may be coupled to one of the assembly electrodes in the cell assemblies, and each of the assembly electrodes in the cell assemblies may be coupled to one of the enclosure interfaces 2011-2014. Thus, there may be two cell assemblies installed in the battery enclosure 200 when each of the cell assemblies includes two assembly electrodes.

In some implementations, the battery enclosure 200 may be installed by a battery housing 203 and two battery plates. The cell assemblies having the assembly electrodes may be installed in the battery housing 203. The two battery plates may be coupled to the battery housing 203 to cover on the cell assemblies. The two battery plates may be the front plate 201 and the back plate 202. One of the two battery plates may include the fluid inlet 251, the fluid outlet 252, and the enclosure interfaces 2011-2014 each disposed on an outer surface of the one of the two battery plates. In some implementations, the battery housing 203 may be integral with the back plate 202. When the cell assemblies are installed into the battery housing 203, the front plate 201 may cover the battery housing 203 to generate the battery module 20. In some implementations, the battery housing 203 may be integral with the front plate 201. When the cell assemblies are installed into the battery housing 203, the back plate 202 may cover the battery housing 203 to generate the battery module 20.

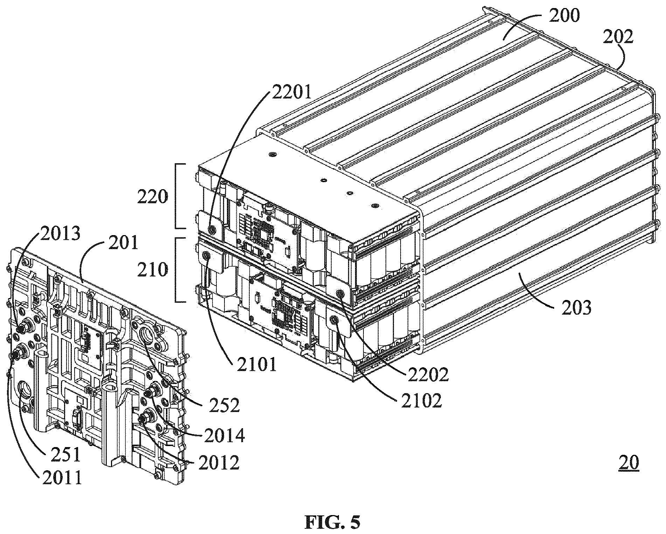

FIG. 5 illustrates a partial exploded view of a battery module according to an implementation of the present disclosure. The battery module 20 may include a battery enclosure 200 and a plurality of cell assemblies installed in the battery enclosure 200. The battery enclosure 200 may further include the front plate 201 and the back plate 202. The battery enclosure 200 may further include the fluid inlet 251, the fluid outlet 252, and the enclosure interfaces 2011-2014.

In some implementations, the number of the cell assemblies may be greater than or equal to two. For example, in FIG. 5, the number of the cell assemblies may be equal to two, and the cell assemblies may be a first cell assembly 210 and a second cell assembly 220.

In some implementations, each of the cell assemblies 210 and 220 may further include a plurality of assembly electrodes each coupled to one of the enclosure interfaces 2011-2014. In some implementations, the number of the assembly electrodes in one of the cell assemblies may be greater than or equal to two. For example, the number of the assembly electrodes in one of the cell assemblies may be equal to two, four, six, or other positive numbers. In FIG. 5, the first cell assembly 210 may include a first assembly electrode 2101 and a second assembly electrode 2102 and the second cell assembly 220 may include a third assembly electrode 2201 and a fourth assembly electrode 2202. Thus, the number of the assembly electrodes in each of the cell assemblies 210 and 220 may be equal to two, and the number of the assembly electrodes in the battery module 20 may be equal to four.

In some implementations, each of the enclosure interfaces 2011-2014 may be coupled to only one of the cell assemblies 210 and 220, and coupled to only one of the assembly electrodes 2101, 2102, 2201, and 2202. In addition, each of the assembly electrodes 2101, 2102, 2201, and 2202 may also be coupled to only one of the enclosure interfaces 2011-2014.

With reference to FIG. 4A and FIG. 5, the fluid may flow into the battery module 20 through the fluid inlet 251, when the battery module 20 is coupled to the fluid cooling thermal management system. The fluid may flow through the cell assembly 210 and then flow into the cell assembly 220. After the fluid flows the cell assemblies 210 and 220, the fluid may flow out of the battery module 20 through the fluid outlet 252. In some implementations, in order to make sure that the fluid may flow through each battery cell of the cell assemblies 210 and 220, the fluid inlet 251 and the fluid outlet 252 may be located at different ends of a diagonal line of the front plate 201 and the fluid inlet 251 may be located below the fluid outlet 252. For example, the fluid inlet 251 may be located at a bottom-left corner of the front plate 201 and the fluid outlet 252 may be located at a top-right corner of the front plate 201.

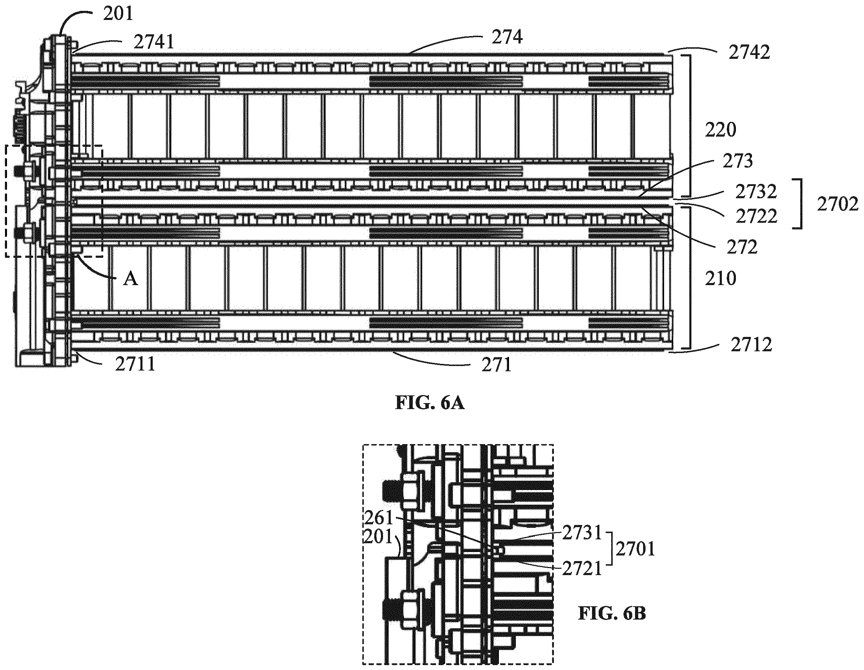

FIG. 6A illustrates a side view of the cell assemblies 210 and 220 and the front plate 201 illustrated in FIG. 5 according to an implementation of the present disclosure. FIG. 6B illustrates an enlarged view of a region A illustrated in FIG. 6A according to an implementation of the present disclosure.

In some implementations, with reference to FIG. 6A and FIG. 6B, the first cell assembly 210 may include a first front opening 2711 and a first back opening 2712 both located at the lower surface 271 of the cell assembly 210 and a second front opening 2721 and a second back opening 2722 both located at the upper surface 272 of the cell assembly 210. In addition, the second cell assembly 220 may include a first front opening 2731 and a first back opening 2732 both located at the lower surface 273 of the cell assembly 220 and a second front opening 2741 and a second back opening 2742 both located at the upper surface 274 of the cell assembly 220. In some implementations, the first front openings 2711 and 2731, and the second front openings 2721 and 2741 may be located neighboring the front plate 201, and the first back openings 2712 and 2732, and the second back openings 2722 and 2742 may be located positioned remotely from the front plate 201. With further reference to FIG. 5, the first back openings 2712 and 2732, and the second back openings 2722 and 2742 may be located neighboring the back plate 202.

In some implementations, the first front opening 2731 may face the second front opening 2721 to generate a front passage 2701 and the first back opening 2732 may face the second back opening 2722 to generate a back passage 2702, when the cell assemblies 210 and 220 are installed together with the front plate 201.

In some implementations, the flow control member 261 may be a sealing member located neighboring the front plate 201 to obstruct a fluid passage between the cell assemblies 210 and 220. Thus, the front passage 2701 generated by the first front opening 2731 and the second front opening 2721 may be obstructed since the flow control member 261 is set on the front plate 201. With further reference to FIG. 4A, when the fluid flows into the battery module 20, the flow control member 261 may be a stopper to prevent the fluid from flowing through the front passage 2701. Therefore, the fluid may fill the cell assembly 210, and then may flow from the cell assembly 210 to the cell assembly 220 through the back passage 2702.

In some implementations, there may be at least one flow control member set on the back plate 202 when the number of the cell assemblies in the battery module is greater than two. For example, there may be three stoppers set on the front plate 201 and two stoppers set on the back plate 202 when the number of the cell assemblies in the battery module is greater than six. When the stopper is set on the back plate 202, a back passage generated by the first back opening and the second back opening may be obstructed.

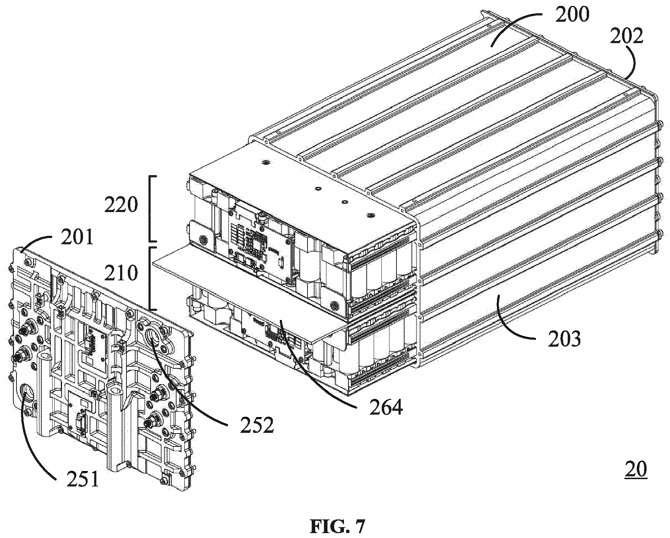

FIG. 7 illustrates a partial exploded view of a battery module according to an implementation of the present disclosure. The battery module 20 may include a battery enclosure 200, a plurality of cell assemblies 210 and 220 installed in the battery enclosure 200, and a flow control member 264 inserted between the cell assemblies 210 and 220. The flow control member 264 may be a sealing member to obstruct a fluid passage between the cell assemblies 210 and 220. The battery enclosure 200 may further include the front plate 201 and the back plate 202. The battery enclosure 200 may further include the fluid inlet 251, the fluid outlet 252, and the enclosure interfaces 2011-2014.

In some implementations, the number of the cell assemblies may be greater than or equal to two. For example, in FIG. 7, the number of the cell assemblies may be equal to two, and the cell assemblies may be a first cell assembly 210 and a second cell assembly 220.

In some implementations, each of the cell assemblies 210 and 220 may further include a plurality of assembly electrodes each coupled to one of the enclosure interfaces 2011-2014. In some implementations, the number of the assembly electrodes in some of the cell assemblies may be greater than or equal to two. In FIG. 7, the number of the assembly electrodes in each of the cell assemblies 210 and 220 may be equal to two, and the number of the assembly electrodes in the battery module 20 may be equal to four. In some implementations, each of the enclosure interfaces 2011-2014 may be coupled to only one of the cell assemblies 210 and 220, and coupled to only one of the assembly electrodes 2101, 2102, 2201, and 2202. In addition, each of the assembly electrodes 2101, 2102, 2201, and 2202 may also be coupled to only one of the enclosure interfaces 2011-2014.

With reference to FIG. 4A and FIG. 7, the fluid may flow into the battery module 20 through the fluid inlet 251, when the battery module 20 is coupled to the fluid cooling thermal management system. The fluid may flow through the cell assembly 210 and then flow into the cell assembly 220. After the fluid flows the cell assemblies 210 and 220, the fluid may flow out of the battery module 20 through the fluid outlet 252. In some implementations, the fluid inlet 251 and the fluid outlet 252 may be located at different ends of a diagonal line of the front plate 201 and the fluid inlet 251 may be located below the fluid outlet 252.

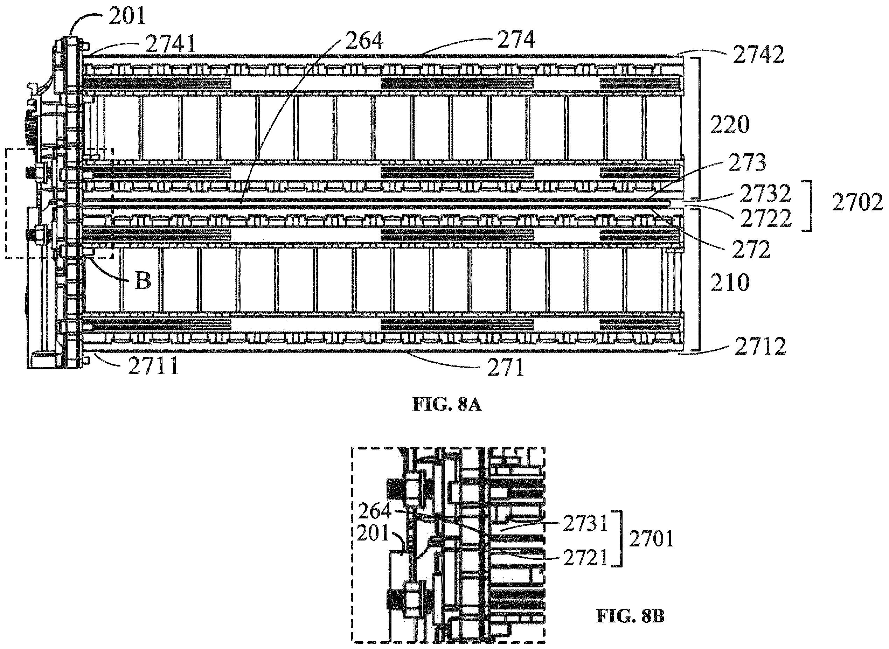

FIG. 8A illustrates a side view of the cell assemblies 210 and 220, the flow control member 264, and the front plate 201 illustrated in FIG. 7 according to an implementation of the present disclosure. FIG. 8B illustrates an enlarged view of a region B illustrated in FIG. 8A according to an implementation of the present disclosure.

In some implementations, with reference to FIG. 8A and FIG. 8B, the first cell assembly 210 may include a first front opening 2711 and a first back opening 2712 both located at the lower surface 271 of the cell assembly 210 and a second front opening 2721 and a second back opening 2722 both located at the upper surface 272 of the cell assembly 210. In addition, the second cell assembly 220 may include a first front opening 2731 and a first back opening 2732 both located at the lower surface 273 of the cell assembly 220 and a second front opening 2741 and a second back opening 2742 both located at the upper surface 274 of the cell assembly 220.

In some implementations, the first front opening 2731 may face the second front opening 2721 to generate a front passage 2701 and the first back opening 2732 may face the second back opening 2722 to generate a back passage 2702, when the cell assemblies 210 and 220 are installed together with the front plate 201.

In some implementations, the flow control member 264 may be a sealing member inserted between the cell assemblies 210 and 220 to obstruct a fluid passage between the cell assemblies 210 and 220. Thus, the front passage 2701 generated by the first front opening 2731 and the second front opening 2721 may be obstructed when the flow control member 264 is inserted from the front plate 201. With further reference to FIG. 4A, when the fluid flows into the battery module 20, the flow control member 264 may be a bulkhead member to prevent the fluid from flowing through the front passage 2701. In addition, a length of the flow control member 264 may be shorter than a length of the cell assemblies 210 and 220, so the flow control member 264 may be too short to further obstruct the back passage 2702 generated by the first back opening 2732 and the second back opening 2722. Therefore, the fluid may fill the cell assembly 210, and then may flow from the cell assembly 210 to the cell assembly 220 through the back passage 2702.

In some implementations, there may be at least one flow control member inserted from the back plate 202 when the number of the cell assemblies in the battery module is greater than two. For example, there may be three bulkhead members inserted from the front plate 201 and two bulkhead members inserted from the back plate 202 when the number of the cell assemblies in the battery module is greater than six. When the bulkhead member is inserted from the back plate 202, a back passage generated by the first back opening and the second back opening may be obstructed. In addition, the bulkhead member may be too short to further obstruct the front passage generated by the first front opening and the second front opening.

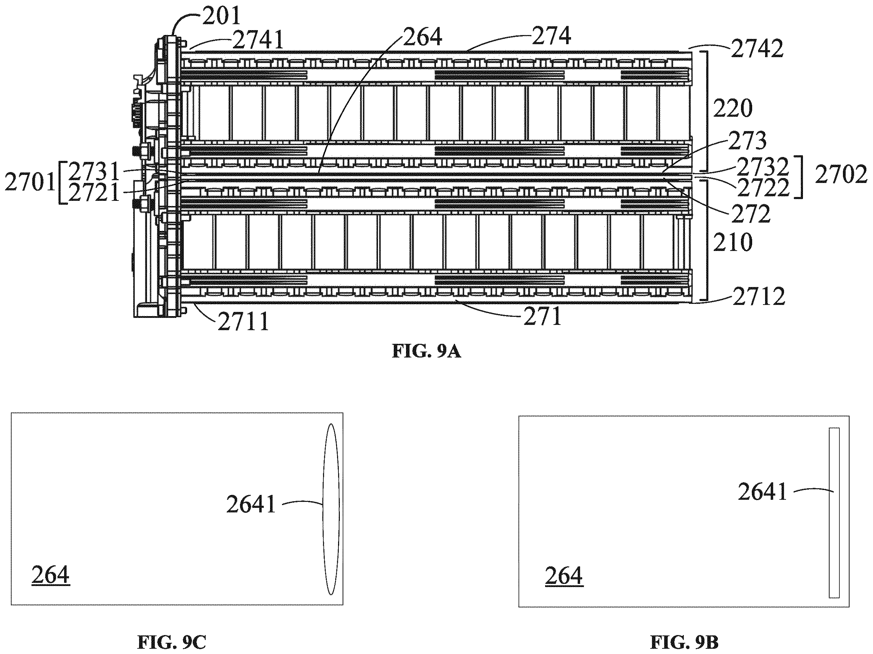

FIG. 9A illustrates a side view of the cell assemblies 210 and 220, the flow control member 264, and the front plate 201 illustrated in FIG. 7 according to an implementation of the present disclosure. FIG. 9B and FIG. 9C are illustrations of an example flow control member having a bulkhead opening according to an implementation of the present disclosure.

In some implementations, with reference to FIG. 9A, the first cell assembly 210 may include a first front opening 2711 and a first back opening 2712 both located at the lower surface 271 of the cell assembly 210 and a second front opening 2721 and a second back opening 2722 both located at the upper surface 272 of the cell assembly 210. In addition, the second cell assembly 220 may include a first front opening 2731 and a first back opening 2732 both located at the lower surface 273 of the cell assembly 220 and a second front opening 2741 and a second back opening 2742 both located at the upper surface 274 of the cell assembly 220.

In some implementations, the first front opening 2731 may face the second front opening 2721 to generate a front passage 2701 and the first back opening 2732 may face the second back opening 2722 to generate a back passage 2702, when the cell assemblies 210 and 220 are installed together with the front plate 201.

In some implementations, the flow control member 264 may be a sealing member inserted between the cell assemblies 210 and 220 to obstruct a fluid passage between the cell assemblies 210 and 220. Thus, the front passage 2701 generated by the first front opening 2731 and the second front opening 2721 may be obstructed when the flow control member 264 is inserted from the front plate 201. With further reference to FIG. 4A, when the fluid flows into the battery module 20, the flow control member 264 may be the bulkhead member to prevent the fluid from flowing through the front passage 2701. In addition, although a length of the flow control member 264 may be identical to a length of the cell assemblies 210 and 220, the flow control member 264 may include a bulkhead opening neighboring the back plate 202 for the fluid to flow through the flow control member 264. Therefore, the fluid may fill the cell assembly 210, and then may flow from the cell assembly 210 to the cell assembly 220 through the back passage 2702.

In some implementations, there may be at least one flow control member inserted from the back plate 202 when the number of the cell assemblies in the battery module is greater than two. For example, there may be three bulkhead members inserted from the front plate 201 and two bulkhead members inserted from the back plate 202 when the number of the cell assemblies in the battery module is greater than six. When the bulkhead member is inserted from the back plate 202, a back passage generated by the first back opening and the second back opening may be obstructed. In addition, the bulkhead opening neighboring the front plate 201 may be allow the fluid to flow through the front passage generated by the first front opening and the second front opening.

In some implementations, in FIG. 9B, the bulkhead opening 2641 may be a rectangular slit on the flow control member 264. In some implementations, in FIG. 9C, the bulkhead opening may be an oval slit on the flow control member 264. In some implementations, the bulkhead opening 2641 may be connected with the back passage 2702 for the fluid to flow through the back passage 2702 when the bulkhead opening 2641 neighbors the back plate 202. In addition, the bulkhead opening may be connected with the front passage for the fluid to flow through the front passage when the bulkhead opening neighbors the front plate 201.

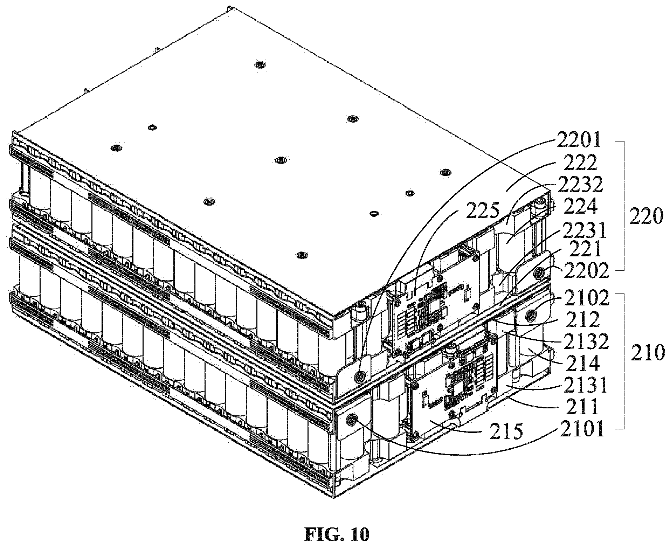

FIG. 10 illustrates a perspective view of two cell assemblies 210 and 220 illustrated in FIG. 5 according to an implementation of the present disclosure. In some implementations, the cell assembly 210 may include a bottom cover 211, a top cover 212, a cell holder, a plurality of battery cells 214, and a plurality of assembly electrodes, and the cell assembly 220 may include a bottom cover 221, a top cover 222, a cell holder, a plurality of battery cells 224, and a plurality of assembly electrodes. In some implementations, the cell holder of the cell assembly 210 may include a bottom cell holder 2131 and a top cell holder 2132, and cell holder of the cell assembly 220 may include a bottom cell holder 2231 and a top cell holder 2232. In some implementations, the number of the assembly electrodes may be equal to or greater than two. For example, in FIG. 10, in some implementations, the cell assembly 210 may have two assembly electrodes 2101 and 2102 and the cell assembly 220 may have two assembly electrodes 2201 and 2202.

In some implementations, the bottom cell holder 2131 may be installed below the battery cells 214, and the top cell holder 2132 may be installed above the battery cells 214. Thus, the battery cells 214 may be sandwiched between the bottom cell holder 2131 and the top cell holder 2132 and supported by the bottom cell holder 2131 and the top cell holder 2132. In some implementations, the bottom cover 211 may be installed below the bottom cell holder 2131, and the top cover 212 may be installed above the top cell holder 2132. Thus, the bottom cell holder 2131, the battery cells 214, and the top cell holder 2132 may be sandwiched between the bottom cover 211 and the top cover 212.

In some implementations, the cell assemblies 210 and 220 may respectively have one of a plurality of monitoring members 215 and 225. The monitoring member 215 may be used to monitor an operation status of the cell assembly 210, and the monitoring member 225 may be used to monitor an operation status of the cell assembly 220. In some implementations, the operation status may include voltage data, current data, and temperature data. In some implementations the monitoring members 215 and 225 may be a cell monitoring unit printed circuit board assembly (CMUPCBA) including a plurality of sensors to monitor the operation status.

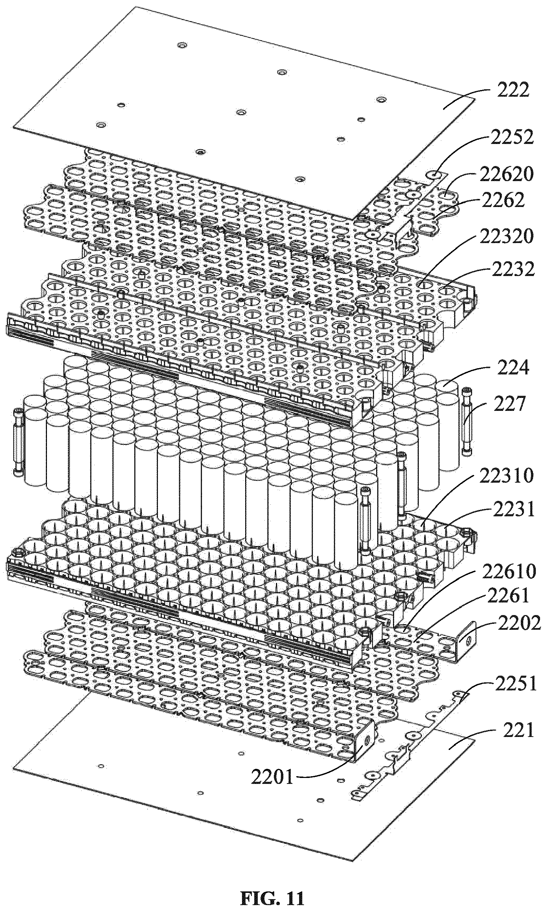

FIG. 11 illustrates an exploded view of the cell assembly 220 illustrated in FIG. 10 according to an implementation of the present disclosure. In some implementations, with reference to FIG. 10, the cell assembly 220 may further include a bottom wiring member 2251, a top wiring member 2252, a bottom connector member 2261, a top connector member 2262, and a plurality of supporting members 227. In some implementations, the bottom cell holder 2231, the battery cells 224, and the top cell holder 2232 may be sandwiched between the bottom connector member 2261 and a top connector member 2262. In addition, the bottom connector member 2261 may be installed above the bottom cover 221, and the top connector member 2262 may be installed below the top cover 222. In some implementations, the battery cells 224 may be lithium-ion battery cells, or any other rechargeable battery.

In some implementations, the bottom cell holder 2231 may include a plurality of bottom holder holes 22310, and the top cell holder 2232 may include a plurality of top holder holes 22320. Each of the bottom holder holes 22310 may be aligned with one of the top holder holes 22320. The battery cells 224 may be inserted into the bottom holder holes 22310 and the top holder holes 22320 to fix on the bottom cell holder 2231 and the top cell holder 2232. Since each of the bottom holder holes 22310 is aligned with one of the top holder holes 22320, the battery cells 224 may be vertically fixed on the bottom cell holder 2231 and the top cell holder 2232.

In some implementations, at least one of the bottom connector member 2261 or the top connector member 2262 may include a plurality of connector apertures. In some implementations, the bottom connector member 2261 may include a plurality of bottom connector apertures 22610. In some implementations, the top connector member 2262 may include a plurality of top connector apertures 22620. When the bottom connector member 2261 includes the bottom connector apertures 22610, each of the bottom holder holes 22310 may be aligned with one of the bottom connector apertures 22610. When the top connector member 2262 includes the top connector apertures 22620, each of the top holder holes 22320 may be aligned with one of the top connector apertures 22620.

In some implementations, the bottom connector member 2261 may be installed below the bottom cell holder 2231 to connect with the battery cells 224 and be electrically connected with the battery cells 224 by a plurality of connecting members (not shown). Each of the connecting members may be respectively used to couple a corresponding one of the battery cells 224 to the bottom connector member 2261 through a corresponding one of the bottom holder holes 22310 and a corresponding one of the bottom connector apertures 22610.

In some implementations, the top connector member 2262 may be installed above the top cell holder 2232 to connect with the battery cells 224 and be electrically connected with the battery cells 224 by the connecting members (not shown). Each of the connecting members may be respectively used to couple a corresponding one of the battery cells 224 to the top connector member 2262 through a corresponding one of the top holder holes 22320 and a corresponding one of the top connector apertures 22620.

In some implementations, the connecting members may include a plurality of bonders. In some implementations, the connecting members may include a plurality of connecting wires.

In some implementations, at least one of the bottom connector member 2261 or the top connector member 2262 may include assembly electrodes. In FIG. 11, the bottom connector member 2261 may include the two assembly electrodes 2201 and 2202. With reference to FIG. 10, the top connector member of the cell assembly 210 may include the two assembly electrodes 2101 and 2102. Since the at least one of the bottom connector member 2261 or the top connector member 2262 is electrically coupled to the battery cells 224, the assembly electrodes may be also electrically coupled to the battery cells 224 and further coupled to one of the enclosure interfaces 2011-2014. With reference to FIG. 5, FIG. 10, and FIG. 11, the two assembly electrodes 2101 and 2102 of the top connector member of the cell assembly 210 may be electrically coupled to the enclosure interfaces 2011 and 2012, and the two assembly electrodes 2201 and 2202 of the bottom connector member 2261 may be electrically coupled to the enclosure interfaces 2013 and 2014.

In some implementations, the bottom wiring member 2251 may be installed on the bottom cell holder 2231 and electrically connected to the bottom connector member 2261, and the top wiring member 2252 may be installed on the top cell holder 2232 and electrically connected to the top connector member 2262. In some implementations, the bottom wiring member 2251 may be directly installed on the bottom connector member 2261, and the top wiring member 2252 may be directly installed on the top connector member 2262. In some implementations, with reference to FIG. 10, the monitoring member 215 may be electronically connected to the bottom wiring member 2251 and the top wiring member 2252. Since the bottom wiring member 2251 and the top wiring member 2252 are electronically connected to the bottom connector member 2261 and the top connector member 2262, which are electronically connected to the battery cells 224, the monitoring member 215 may receive a plurality of signals from the battery cells 224 to monitor the operation status of the cell assembly 220. In some implementations, the bottom wiring member 2251 and the top wiring member 2252 may further include a temperature sensing circuit for detecting the temperature of the bottom connector member 2261 and top connector member 2262. Thus, the received signals may also include the temperatures.

In some implementations, in order to prevent from generating a fluid turbulence in the battery module due to the bottom wiring member 2251 and the top wiring member 2252, the bottom wiring member 2251 and the top wiring member 2252 may be flexible printed circuits (FPC) rather than a plurality of wiring cords. When the bottom wiring member 2251 and the top wiring member 2252 are wiring cords, the wiring cords may be distributed in the battery enclosure 200. Thus, a flow direction of the fluid may be disturbed, so that the cooling efficiency may be decreased. When the bottom wiring member 2251 and the top wiring member 2252 are FPCs, the FPCs may be flat and fixed on the bottom cell holder 2231 and the top cell holder 2232. Thus, the flow direction of the fluid may not be influenced by the bottom cell holder 2231 and the top cell holder 2232, so that the cooling efficiency may not be influenced by the bottom cell holder 2231 and the top cell holder 2232. When the monitoring members 215 and 225 fail to receive the data of the operation status, such as the voltage data, the battery module 20 may fail to operate normally. In order to maintain stable operation, the bottom wiring member 2251 and the top wiring member 2252 may be fixed on the bottom cell holder 2231 and the top cell holder 2232 through at least one of a ribbon bonding or a screw lock with copper sheet. For example, the screw locks may be used to fix the bottom wiring member 2251 and the bottom cell holder 2231 together with the copper sheets, and the ribbon bonding may be further applied to couple the copper sheets with the bottom cell holder 2231. In some implementations, the ribbon bonding may be applied by hard gold.

In some implementations, the supporting members 227 may be installed between the bottom cell holder 2231 and the top cell holder 2232. The supporting members 227 may be installed in parallel to the battery cells 224 for providing a supporting strength against the weight of the components of the cell assembly 220.

In some implementations, the bottom cover 221 and the top cover 222 may be used to protect the cell assembly 220. For example, the bottom cover 221 and the top cover 222 may provide protection to the ribbon bonding in the cell assembly 220 from direct contact or external damage from environment. In some implementations, the bottom cover 221 and the top cover 222 may control the fluid to flow laterally and prevent the fluid from directly and vertically flowing out of the cell assembly 220 from the top cell holder 2232 .

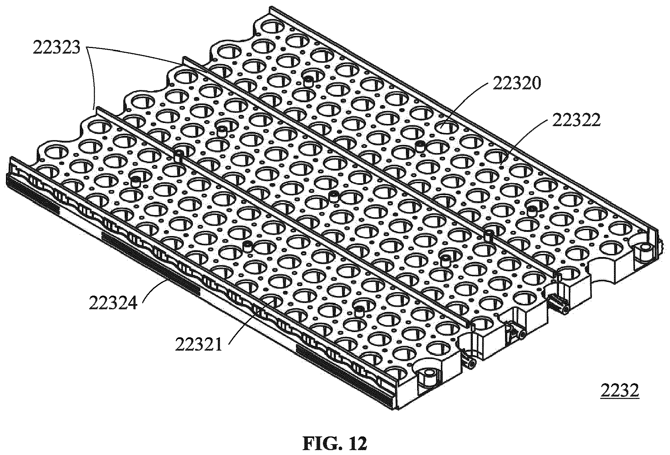

FIG. 12 illustrates a perspective view of the top cell holder 2232 illustrated in FIG. 11 according to an implementation of the present disclosure. The top cell holder 2232 further include the plurality of top holder holes 22320, a plurality of top interference members 22321, a plurality of top fluid holes 22322, a plurality of top wall members 22323, and a plurality of top rib members 22324.

In some implementations, the top holder holes 22320 may be used to hold the battery cells 224. In some implementations, each of the top interference members 22321 may be formed in one of the top holder holes 22320. The top interference members 22321 may slightly protrude from inner surfaces (not shown) of the top holder holes 22320. For example, each of the top interference members 22321 may include an extended protrusion or a rib. Thus, with further reference to FIG. 11, the top interference members 22321 may provide interference forces to the battery cells 224 inserted into the top holder holes 22320, so it may be hard for an accident event to remove the battery cells 224 from the top interference members 22321. In some implementations, the bottom holder holes 22310 of the bottom cell holder 2231 may also include a plurality of bottom interference members (not shown) which are slightly protruded from inner surfaces (not shown) of the bottom holder holes 22310.

In some implementations, the cell assembly 210 may also include the top interference members and the bottom interference members. In some implementations, the amount of interference in the bottom interference members may be high enough to stabilize the battery cells 224, even if there is no top interference member in the top cell holder 2232. In some implementations, the amount of interference in the top interference members may be low relative to the amount of interference in the bottom interference members, so the battery cells 224 may be easily assembled into the top cell holder 2232. In some implementations, the amount of interference in the top interference members may be equal to the amount of interference in the bottom interference members.

In some implementations, the fluid may flow through the top fluid holes 22322 for flowing out of the cell assembly 220 when the fluid flows into the cell assembly 220. In addition, the fluid may flow through a plurality of bottom fluid holes (not shown) of the bottom cell holder 2231 for flowing proximate to the battery cells 224 to control the temperature of the battery cells 224 when the fluid flows into the cell assembly 220. The top fluid holes 22322 may neighbor the top holder holes 22320. In some implementations, each of the top fluid holes 22322 may neighbor at least three of the top holder holes 22320, and each of the top holder holes 22320 may neighbor at least three of the top fluid holes 22322. In FIG. 12, three neighboring ones of the top holder holes 22320 may surround one of the top fluid holes 22322, which may be located at a center of the three neighboring top holder holes 22320, and three neighboring ones of the top fluid holes 22322 may surround one of the top holder holes 22320, which may be located at a center of the three neighboring top fluid holes 22322. In some implementations, each of the top fluid holes 22322 may include at least one through-hole. For example, the number of the at least one through-hole in one of the top fluid holes 22322 may be equal to one, two, three, or more. In some implementations, the top fluid holes 22322 may be smaller than the top holder holes 22320. In some implementations, each of the bottom fluid holes may neighbor at least three of the bottom holder holes 22310, and each of the bottom holder holes 22310 may neighbor at least three of the bottom fluid holes. In some implementations, each of the bottom fluid holes may include at least one through-hole. In some implementations, the cell assembly 210 may also include the top fluid holes and the bottom fluid holes.

In some implementations, the top wall members 22323 may protrude from an upper surface (not shown) of the top cell holder 2232. With reference to FIG. 5, the top wall members 22323 may be perpendicular to the front plate 201 and the back plate 202. The top wall members 22323 may guide the fluid flow along the direction of the top wall members 22323. Thus, the fluid may be evenly distributed and flow in the cell assembly 220. In some implementations, the bottom cell holder 2231 may also include a plurality of bottom wall members (not shown). The bottom wall members may protrude from a lower surface (not shown) of the bottom cell holder 2231. In addition, the bottom wall members of the bottom cell holder 2231 may also be perpendicular to the front plate 201 and the back plate 202. In some implementations, the number of the top wall members 22323 may be different from the number of the bottom wall members. For example, the number of the top wall members 22323 may be equal to two, and the number of the bottom wall members may be equal to three. In some implementations, the cell assembly 210 may also include the top wall members and the bottom wall members.

In some implementations, the top rib members 22324 may be located at two sides of the top cell holder 2232. The top rib members 22324 may be slid into a corresponding railway of the battery enclosure 200 when the cell assembly 220 is removably installed into the battery enclosure 200. In some implementations, the bottom cell holder 2231 may also have a plurality of bottom rib members (not shown) located at two sides of the bottom cell holder 2231. The bottom rib members may be slid into a corresponding railway of the battery enclosure 200 when the cell assembly 220 is removably installed into the battery enclosure 200. In some implementations, the cell assembly 210 may also include the top rib members and the bottom rib members.

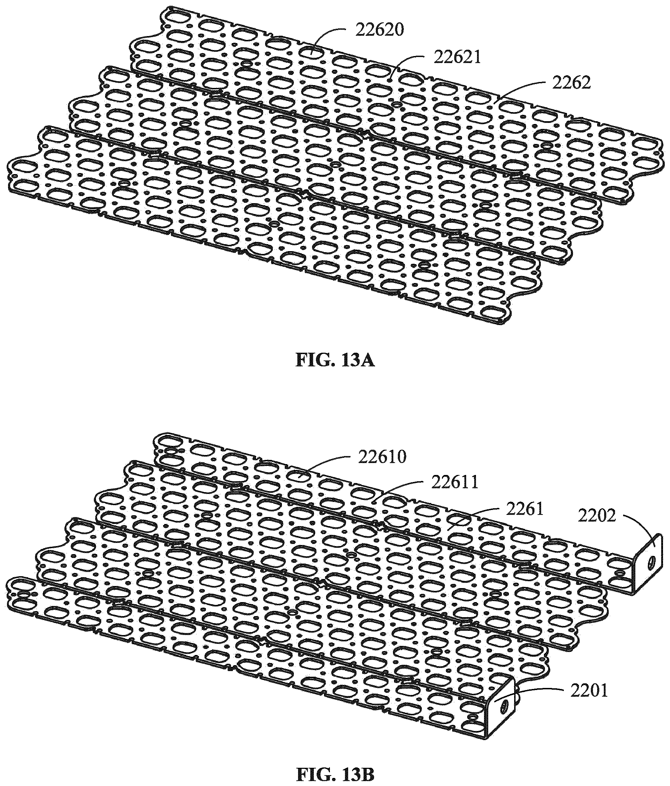

FIG. 13A and FIG. 13B illustrate perspective views of the bottom connector member 2261 and the top connector member 2262 illustrated in FIG. 11 according to an implementation of the present disclosure. In some implementations, with reference to FIG. 11, the bottom connector member 2261 may further include a plurality of bottom fluid apertures 22611, and the top connector member 2262 may further include a plurality of top fluid apertures 22621.

In some implementations, with reference to FIG. 11, each of the bottom connector apertures 22610 may correspond to one of the bottom holder holes 22310, and each of the top connector apertures 22620 may correspond to one of the top holder holes 22320. Thus, each of the connecting members may be coupled the one of the battery cells 224 to the bottom connector member 2261 through one of the bottom connector apertures 22610 and one of the bottom holder holes 22310 or to the top connector member 2262 through one of the top connector apertures 22620 and one of the top holder holes 22320. Therefore, the bottom connector member 2261 and the top connector member 2262 may be electrically coupled to the battery cells 224 through the connecting member. Furthermore, the assembly electrodes 2201 and 2202 may be coupled to the bottom connector member 2261. Thus, when the assembly electrodes 2201 and 2202 are coupled to other power systems, the battery cells 224 may supply power through the connecting members, the bottom connector member 2261 and the top connector member 2262. In some implementations, with reference to FIG. 10, when the assembly electrodes 2101 and 2102 are coupled to other power systems, the battery cells 214 may supply power through the connecting members, the bottom connector member and the top connector member of the cell assembly 210.

In some implementations, with reference to FIG. 11, each of the bottom fluid apertures 22611 may correspond to one of the bottom fluid holes of the cell assembly 220, and each of the top fluid apertures 22621 may correspond to one of the top fluid holes 22322. Thus, when the fluid flows into the cell assembly 220, the fluid may flow through the bottom fluid holes of the cell assembly 220 and the bottom fluid apertures 22611 for flowing into the cell assembly 220, and then flow through the top fluid holes 22322 and the top fluid apertures 22621 for flowing out of the cell assembly 220. The top fluid apertures 22621 may neighbor the top connector apertures 22620. In some implementations, each of the top fluid apertures 22621 may neighbor at least three of the top connector apertures 22620, and each of the top connector apertures 22620 may neighbor at least three of the top fluid apertures 22621. In FIG. 13A, three neighboring ones of the top connector apertures 22620 may surround one of the top fluid apertures 22621, which may be located at a center of the three neighboring top connector apertures 22620, and three neighboring ones of the top fluid apertures 22621 may surround one of the top connector apertures 22620, which may be located at a center of the three neighboring top fluid apertures 22621. In some implementations, each of the top fluid apertures 22621 may include at least one through-aperture. For example, the number of the at least one through-aperture in one of the top fluid apertures 22621 may be equal to one, two, three, or more. In some implementations, the top fluid apertures 22621 may be smaller than the top connector apertures 22620. In some implementations, each of the bottom fluid apertures 22611 may neighbor at least three of the bottom connector apertures 22610, and each of the bottom connector apertures 22610 may neighbor at least three of the bottom fluid apertures 22611. In some implementations, each of the bottom fluid apertures 22611 may include at least one through-aperture. In some implementations, the cell assembly 210 may also include the top fluid apertures and the bottom fluid apertures.

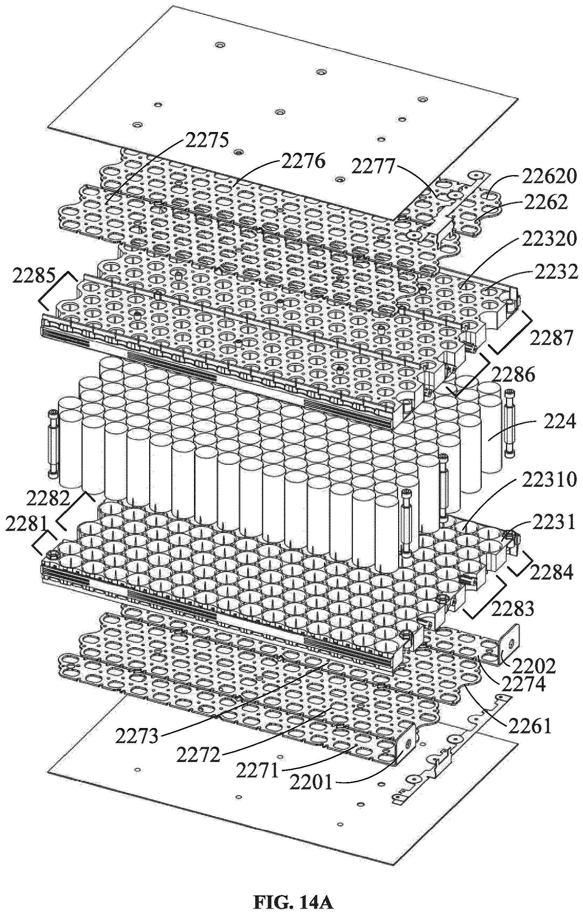

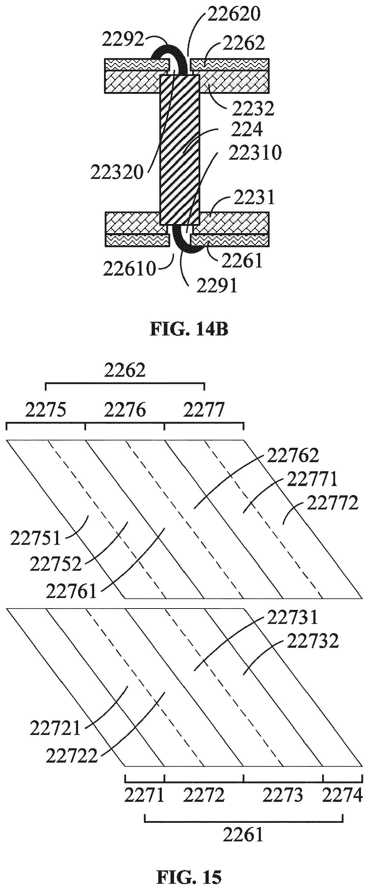

FIG. 14A illustrates an exploded view of the cell assembly 220 illustrated in FIG. 10 according to an implementation of the present disclosure. FIG. 14B is an illustration of an example electrical connection of the battery cell according to an implementation of the present disclosure. In some implementations, the bottom connector member 2261 may include a plurality of bottom connector plates, and the top connector member 2262 may include a plurality of top connector plates. The number of the bottom connector plates may be equal to Nb, and the number of top connector plates may be equal to Nt. In some implementations, the number Nb may be a positive integer, and the number Nt may be a positive integer. In some implementations, the number Nt may be equal to or different from the number Nb. In some implementations, both the bottom connector member 2261 and the top connector member 2262 may be formed by a plate, a sheet, or a panel.

In some implementations, with reference to FIG. 12, the top cell holder 2232 may be divided into a plurality of top holder regions by the top wall members 22323, and the bottom cell holder 2231 may also be divided into a plurality of bottom holder regions by the bottom wall members. Each of the top holder regions may correspond to one of the top connector plates, and each of the bottom holder regions may correspond to one of the bottom connector plates.

In some implementations, in FIG. 14A, the number Nb may be equal to 4, and the number Nt may be equal to 3. In other words, the bottom connector member 2261 may include four bottom connector plates 2271-2274, and the top connector member 2262 may include three top connector plates 2275-2277. In addition, the bottom cell holder 2231 may be divided into four bottom holder regions 2281-2284 by three bottom wall members, and the top cell holder 2232 may be divided into three top holder regions 2285-2287 by the two top wall members 22323. In some implementations, the bottom connector member of the cell assembly 210 may include three bottom connector plates, and the top connector member of the cell assembly 210 may include four top connector plates. In addition, the bottom cell holder of the cell assembly 210 may be divided into three bottom holder regions by two bottom wall members, and the top cell holder of the cell assembly 210 may be divided into four top holder regions by the three top wall members 22323. In other words, an electrical connection structure of the cell assembly 210 may be an inverted structure of the electrical connection structure of the cell assembly 220.

In some implementations, in FIG. 14B, one of the battery cells 224 may be inserted into a corresponding one of the bottom holder holes 22310 in the bottom cell holder 2231 and a corresponding one of the top holder holes 22320 in the top cell holder 2232. In addition, one of the bottom connector apertures 22610 in the bottom connector member 2261 may face a corresponding one of the bottom holder holes 22310 in the bottom cell holder 2231, and one of the top connector apertures 22620 in the top connector member 2262 may face a corresponding one of the top holder holes 22320 in the top cell holder 2232. Thus, one of a plurality of bottom connecting members 2291 may penetrate through a corresponding one of the bottom connector apertures 22610 in the bottom connector member 2261 and a corresponding one of the bottom holder holes 22310 in the bottom cell holder 2231 to couple a corresponding one of the battery cells 224 to the bottom connector member 2261. In addition, one of a plurality of top connecting members 2292 may penetrate through a corresponding one of the top connector apertures 22620 in the top connector member 2262 and a corresponding one of the top holder holes 22320 in the top cell holder 2232 to couple the corresponding battery cell 224 to the top connector member 2262. In some implementations, each of the bottom connecting members 2291 and the top connecting members 2292 may be a bonder, a wire, or any other electrical connectors.

In some implementations, with reference to FIG. 14A and FIG. 14B, each of the battery cells 224 may be coupled to the bottom connector member 2261 and the top connector member 2262. In some implementations, one of the bottom connector member 2261 and the top connector member 2262 may include two output connectors for the battery cells 224 each coupled to one of the enclosure interfaces. For example, the two output connectors may be the assembly electrodes 2201 and 2202. In some implementations, the bottom connector member 2261 of the cell assembly 220 may include the assembly electrodes 2201 and 2202 respectively on the bottom connector plates 2271 and 2274. In addition, with reference to FIG. 5 and FIG. 6, the top connector member of the cell assembly 210 may include the assembly electrodes 2101 and 2102 respectively on two top connector plates.

FIG. 15 is an illustration of an example connection relationship between the bottom connector member 2261 and the top connector member 2262 illustrated in FIG. 14A according to an implementation of the present disclosure. In some implementations, the bottom connector member 2261 may include four bottom connector plates 2271-2274, and the top connector member 2262 may include three top connector plates 2275-2277.

In some implementations, the bottom connector plate 2272 may further include two bottom connector regions 22721 and 22722, and the bottom connector plate 2273 may further include two bottom connector regions 22731 and 22732. In some implementations, the top connector plate 2275 may further include two top connector regions 22751 and 22752, the top connector plate 2276 may further include two top connector regions 22761 and 22762, and the top connector plate 2277 may further include two top connector regions 22771 and 22772.

In some implementations, the bottom connector plate 2271 may correspond to the top connector region 22751 to generate a first cell region including a first portion of the battery cells 224, the bottom connector region 22721 may correspond to the top connector region 22752 to generate a second cell region including a second portion of the battery cells 224, the bottom connector region 22722 may correspond to the top connector region 22761 to generate a third cell region including a third portion of the battery cells 224, the bottom connector region 22731 may correspond to the top connector region 22762 to generate a fourth cell region including a fourth portion of the battery cells 224, the bottom connector region 22732 may correspond to the top connector region 22771 to generate a fifth cell region including a fifth portion of the battery cells 224, and the bottom connector plate 2274 may correspond to the top connector region 22772 to generate a sixth cell region including a sixth portion of the battery cells 224. In some implementations, the directions of the first, third, and fifth portions of the battery cells 224 may be identical to each other, the directions of the second, fourth, and sixth portions of the battery cells 224 may be identical to each other, and the directions of the first, third, and fifth portions of the battery cells 224 may be different from the second, fourth, and sixth portions of the battery cells 224. Thus, the battery cells 224 may be coupled to each other in series or in parallel by the bottom connector member 2261 and the top connector member 2262. For example, the battery cells 224 corresponding to the same top connector regions and the same bottom connector regions may be coupled to each other in parallel and the battery cells 224 corresponding to different top connector regions and different bottom connector regions may be coupled to each other in series.

In some implementations, both of the assembly electrodes 2201 and 2202 may be disposed on one of the bottom connector member and the top connector member. For example, the assembly electrodes 2201 and 2202 may be disposed on the bottom connector member 2261. In some implementations, both of the assembly electrodes 2201 and 2202 may be disposed on one of the bottom connector plates and the top connector plates to form an L-shaped connector plate. In addition, a long side of the L-shaped connector plate may be a connector plate of a connector member and a short side of the L-shaped connector plate may be one of the assembly electrodes.

In some implementations, the bottom connector member of the cell assembly 210 may be identical to the top connector member 2262 of the cell assembly 220, and the top connector member of the cell assembly 210 may be identical to the bottom connector member 2261 of the cell assembly 220. In some implementations, with reference to FIG. 10, the directions of the battery cells 214 may be identical to the directions of the battery cells 224. In some implementations, the directions of the battery cells 214 may be identical to inverted directions of the battery cells 224.

In some implementations, the number of the battery cells in one cell assembly may be equal to Nc. In some implementations, the bottom connector member of the cell assembly may be divided into a plurality of bottom connector regions. The number of the bottom connector regions in the bottom connector member of the cell assembly may be equal to Nr. Thus, the number of the battery cells in each of the bottom connector regions may be equal to a value Np calculated by dividing the number Nc by the number Nr. In some implementations, an arrangement of the battery cells may be regarded as (Nr)S(Np)P . For example, the number Nc of the battery cells may be equal to 180 and the number Nr of the bottom connector regions in the bottom connector member may be equal to 6. Thus, the number Np of the battery cells in each of the bottom connector regions may be equal to 30, and the arrangement of the battery cells may be regarded as 6S30P. In some implementations, the arrangement of the battery cells may include 6S30P, 4S45P, 12S15P, and 10S18P, when the number Nc of the battery cells may be equal to 180.

In some implementations, the arrangement of the battery cells may be determined based on the demand of the output current of the cell assembly. If the demand of the output current is increased, the number Np of the battery cells in each of the bottom connector regions of the cell assembly may be increased. In other words, with reference to FIG. 15, the connection relationship between the bottom connector member and the top connector member may be changed based on the number Nr of the bottom connector regions in the bottom connector member of the cell assembly. Furthermore, the wall members of the bottom cell holder and the top cell holder may also be changed based on the number Nr of the bottom connector regions in the bottom connector member of the cell assembly.

For example, the arrangement of the battery cells may be 4S45P. Thus, the bottom connector member may include three bottom connector plates and the middle of the three bottom connector plates may be divided into two bottom connector regions. In addition, the top connector member may include two top connector plates, each divided into two top connector regions. The number of the top connector regions may be equal to four and the number of the battery cells corresponding to one of the four top connector regions may be equal to 45.

In some implementations, the bottom connector plates may be divided into the bottom connector regions along a first direction and the top connector plates may be divided into the top connector regions along the first direction. In some implementations, the bottom connector plates may be divided into the bottom connector regions along a second direction and the top connector plates may be divided into the top connector regions along the second direction. In the implementations, the first direction may be different from the second direction. In some implementations, the first direction may be perpendicular to the second direction. In some implementations, the bottom connector plates may be divided into the bottom connector regions along the first direction and the second direction and the top connector plates may be divided into the top connector regions along the first direction and the second direction. For example, the bottom connector member 2261 and the top connector member 2262 in FIG. 15 may be further divided along a transverse direction to generate more connector regions. For example, there may be twelve top connector regions in the top connector member 2262.

In some implementations, one of the assembly electrodes 2201 and 2202 may be disposed on the bottom connector member 2261 and the other of the assembly electrodes 2201 and 2202 may be disposed on the top connector member 2262. For example, the assembly electrode 2201 may be disposed on the bottom connector member 2261 and the assembly electrode 2202 may be disposed on the top connector member 2262. In some implementations, with reference to FIG. 5, two of the four assembly electrodes in the battery module may be exposed to the outside of two corners of the front plate 201 when each of the assembly electrodes 2201 and 2202 is disposed on different connector members. However, in order to maintain the fluid flow uniformity, the fluid inlet 251 and the fluid outlet 252 may be also disposed on two corners of the front plate 201. Thus, one of the four assembly electrodes and one of the fluid inlet 251 and the fluid outlet 252 may be disposed at the same corner of the front plate 201. In some implementations, the one of the four assembly electrodes may be further coupled to a connector interface disposed neighboring the one of the fluid inlet 251 and the fluid outlet 252 for exposing the outside of the front plate 201.

In some implementations, the bottom connector member 2261 and the top connector member 2262 may be divided into Nr bottom connector regions and Nr top connector regions. Each of the Nr bottom connector regions may correspond one of the Nr top connector regions for define Nr groups of the battery cells 224. In some implementations, the arrangement of the battery cells may include 1S180P, 3S60P, 5S36P and 9S20P, when the number Nc of the battery cells may be equal to 180. In some implementations, when the number Nr is equal to one, one of the cell connector members may be coupled to a positive electrode of the battery module, and the other of the cell connector members may be coupled to a negative electrode of the battery module. In some implementations, when the number Nr is equal to greater than one, one of the connector regions in one of the cell connector members may be coupled to the positive electrode of the battery module, and one of the connector regions in the other of the cell connector members may be coupled to a negative electrode of the battery module.

In some implementations, for example, the arrangement of the battery cells may be 3S60P. Thus, the bottom connector member may include two bottom connector plates and a right one of the two bottom connector plates may be divided into two bottom connector regions. In addition, the top connector member may also include two top connector plates and a left one of the two bottom connector plates may be divided into two bottom connector regions. The number of the top connector regions may be equal to three and the number of the battery cells corresponding to one of the three top connector regions may be equal to 60. In some implementations, the directions of the first and third portions of the battery cells 224 may be identical to each other and different from the directions of the second portion of the battery cells 224. In order to adapt the directions of the first, second, and third parts of the battery cells 224, the assembly electrode 2201 may be disposed on the bottom connector member 2261 and the assembly electrode 2202 may be disposed on the top connector member 2262.

In some implementations, the assembly electrodes 2201 and 2202 may be disposed at different connector members or the same connector member for adapting to different arrangements of the battery cells. In some implementations, the battery module may provide flexibility in the voltage or current range of a cell assembly. Thus, the battery module may be adapted to a variety of specifications in electrical output under certain shared components in a similar structure.

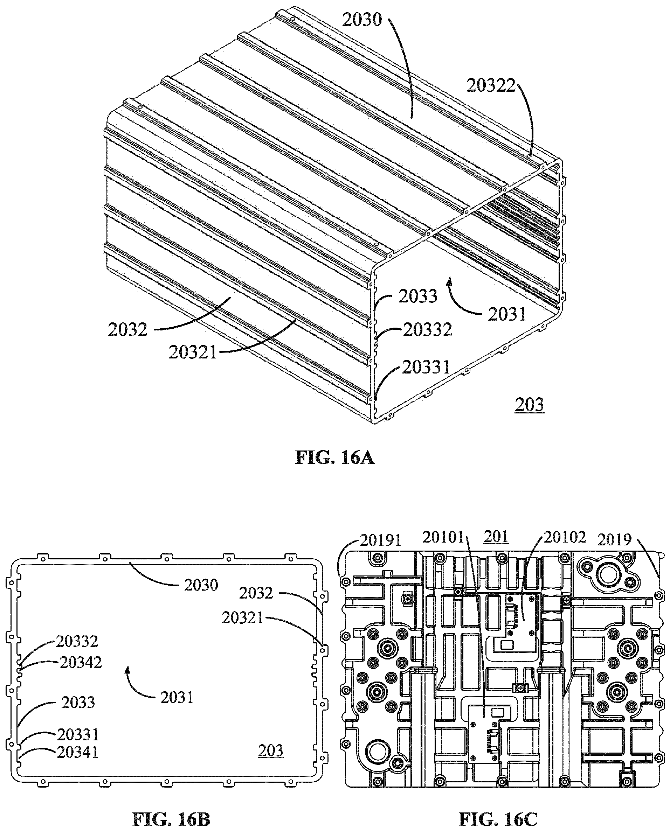

FIG. 16A illustrates a perspective view of the battery housing illustrated in FIG. 4 according to an implementation of the present disclosure. FIG. 16B and FIG. 16C respectively illustrate front views of the battery housing and front plate illustrated in FIG. 4 according to an implementation of the present disclosure.

In some implementations, the battery housing 203 may be formed by a plurality of outer plates 2030. The shape of the battery housing 203 may be a tubing-shape. For example, the battery housing 203 may be similar to a box with at least four outer plates 2030. In some implementations, the shape of the battery housing 203 may be a square pipe or a rectangular tube. Due to the cost demand, an extrusion method for the battery housing 203 may be used in mass production. The battery housing 203 may be made of aluminum or other materials.

In some implementations, with further reference to FIG. 4, the battery housing 203 may include four outer plates 2030 to generate an accommodation space 2031 to be covered by the front plate 201 and the back plate 202. The accommodation space 2031 may be used to accommodate the cell assemblies 210 and 220. In some implementations, the battery housing 203 may include five outer plates 2030 to generate the accommodation space 2031 to be covered by the front plate 201.

In some implementations, the outer plates 2030 of the battery housing 203 may include an outer surface 2032 and an inner surface 2033. The outer surface 2032 may further include a plurality of outer protrusion lines 20321, and the inner surface 2033 may further include a plurality of inner protrusion lines 20331 and a plurality of inner protrusion units 20332. In some implementations, some of the outer protrusion lines 20321 on an upper surface of the outer surface 2032 may further include hanging holes 20322. The hanging holes 20322 may be used to couple to a lifting tool for easily delivering the battery module.

In some implementations, with reference to FIG. 16B, the outer protrusion lines 20321 may protrude from the outer surface 2032 of the four outer plates 2030. In addition, the inner protrusion lines 20331 and the inner protrusion units 20332 may protrude from the inner surface 2033 of two of the four outer plates 2030. In some implementations, the two of the four outer plates 2030 may be two side plates of the battery housing 203.

In some implementations, each of the outer protrusion lines 20321 may extend along a straight line and parallel to each other. In some implementations, each of the outer protrusion lines 20321 may be a long rib extending from a front end (not shown) of the outer plates 2030 to a back end (not shown) of the outer plates 2030. With reference to FIG. 4, the front end of the outer plates 2030 may be covered by the front plate 201, and the back end of the outer plates 2030 may be covered by the back plate. In some implementations, one of the outer protrusion lines 20321 may include a plurality of short ribs aligned along a single straight line and may respectively protrude from the outer surface 2032. For example, one of the outer protrusion lines 20321 may include two short ribs mutually aligned along the single straight line and may respectively protrude from the front end and the back end of the outer surface 2032. In some implementations, some of the outer protrusion lines 20321 may include the long ribs extending from the front end to the back end, and the others of the outer protrusion lines 20321 may include the short ribs distributed along a corresponding one of the straight lines.

In some implementations, each of the inner protrusion lines 20331 and the inner protrusion units 20332 may also extend along a straight line and parallel to each other. In some implementations, each of the inner protrusion lines 20331 and the inner protrusion units 20332 may also be a long rib extending from the front end to the back end. In some implementations, one of the inner protrusion lines 20331 may include a plurality of short ribs mutually aligned along a single straight line and may respectively protrude from the inner surface 2033. In some implementations, one of the inner protrusion units 20332 may include a plurality of short ribs mutually aligned along another single straight line and may respectively protrude from the inner surface 2033. For example, one of the inner protrusion lines 20331 and the inner protrusion units 20332 may include two short ribs mutually aligned along the single straight line and may respectively protrude from the front end and the back end of the inner surface 2033. In some implementations, some of the inner protrusion lines 20331 and the inner protrusion units 20332 may include the long ribs extending from the front end to the back end, and the others of the inner protrusion lines 20331 and the inner protrusion units 20332 may include the short ribs distributed along a corresponding one of the straight lines.

In some implementations, two neighboring ones of the inner protrusion lines 20331 may form a railway 20341. Thus, the inner surface 2033 may include a plurality of railways 20341 generated from the inner protrusion lines 20331. With reference to FIG. 11, each of the railways 20341 may correspond to one of the cell holders, such as the bottom cell holder 2131 and the top cell holder 2132.

In some implementations, two neighboring ones of the inner protrusion units 20332 may form an inner flow slit 20342. Thus, the inner surface 2033 may include a plurality of inner flow slits 20342 generated from the inner protrusion units 20332. With reference to FIG. 6B, the inner flow slits 20342 may be used to accommodate the flow control member 261. In other words, the flow control member 261 may be inserted into the inner flow slits 20342 to obstruct the fluid passage between two neighboring of the cell assemblies. In FIG. 6B the flow control member 261 may be the sealing member to be inserted into the inner flow slits 20342. Since the flow control member 261 may be a stopper, the inner flow slits 20342 may be two small slits respectively formed on the two sides of the battery housing 203. Thus, the inner protrusion units 20332 may be two pair of protrusions respectively protruding from the two sides of the battery housing 203. Therefore, the inner protrusion units 20332 may not extend from the front end to the back end when the flow control member 261 is a stopper.

In some implementations, with reference to FIG. 7, the inner flow slits 20342 may be used to accommodate the flow control member 264. In other words, the inner flow slits 20342 may be inserted by the flow control member 264 to obstruct the fluid passage between two neighboring cell assemblies. In FIG. 7, the flow control member 264 may be the sealing member to be inserted into the inner flow slits 20342. Since the flow control member 264 may be a bulkhead member, the inner flow slits 20342 may be two inner flow tracks respectively formed on the two sides of the battery housing 203. Thus, the inner protrusion units 20332 may be two pair of protrusion lines respectively protruding from the two sides of the battery housing 203. Therefore, the inner protrusion units 20332 may extend from the front end to the back end when the flow control member 264 is the bulkhead member.

In some implementations, with reference to FIG. 4, each of the front plate 201 and the back plate 202 may have two side surfaces. In addition, the side surfaces of the front plate 201 and the back plate 202 may also include a plurality of plate protrusions. In some implementations, with reference to FIG. 16B, each of the plate protrusions may correspond to one of the outer protrusion lines 20321. Thus, each of the plate protrusions and the corresponding outer protrusion lines 20321 may be assembled as a plurality of enclosure protrusion lines. Furthermore, each of the plate protrusions and the outer protrusion lines may further have a pin hole for locking the front plate 201 and the back plate 202 with the battery housing 203. For example, one of the plate protrusions on the back plate 202 may be locked with a corresponding one of the outer protrusion lines for coupling the back plate 202 to the battery housing 203. In some implementations, in FIG. 16C, the front plate 201 may have two side surfaces 2019, and a plurality of plate protrusions 20191 may protrude from the two side surfaces 2019. In addition, each of the plate protrusions 20191 and the outer protrusion lines 20321 may further have enough thickness to form a fastener hole for a screw or a bolt. Thus, each of the plate protrusions 20191 and the corresponding outer protrusion lines 20321 may be assembled as the enclosure protrusion lines.

In some implementations, the front plate 201 may further include a plurality of board interfaces. The number of the board interfaces may be equal to the number of the cell assemblies in the battery module. With reference to FIG. 10 and FIG. 16C, each of the monitoring members 215 and 225 may correspond to one of the board interfaces 20101 and 20102. In some implementations, the board interfaces 20101 and 20102 may be board holes for the monitoring members 215 and 225 to expose to the outside of the front plate 201. Thus, there may be some connector wires to couple the monitoring members 215 and 225 to an outer monitor system for monitoring the operation status of the cell assemblies 210 and 220. In some implementations, the board interfaces 20101 and 20102 may include inner connectors for coupling to the monitoring members 215 and 225 and outer connectors for coupling the monitoring members 215 and 225 to the connector wires and the outer monitor system for monitoring the operation status of the cell assemblies 210 and 220.

In some implementations, with reference to FIG. 10, FIG. 11, and FIG. 16C, the monitoring member 225 may include a circuit board coupled to the bottom wiring member 2251 and a top wiring member 2252 for receiving the operation status and coupled to an output interface (not shown) for outputting the operation status. The output interface may be an output connector exposed to the outside of the front plate 201 and coupled to the circuit board of the monitoring member 225 by a board wire. In some implementations, one end of the board wire may couple to the output interface, and the other end of the board wire may couple to the circuit board of the monitoring member 225. In some implementations, there may be a plate connector disposed between the circuit board and the output interface for fixing and stabilizing the board wire on the front plate 201.

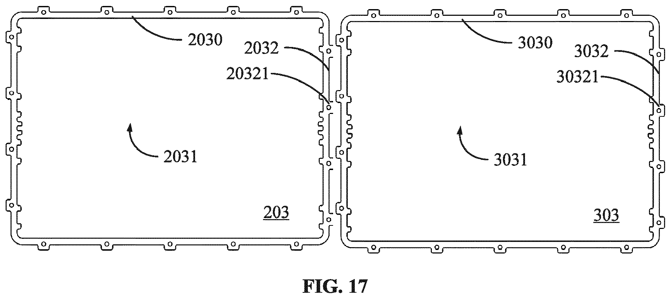

FIG. 17 illustrates a front view of two battery housings illustrated in FIG. 16B according to an implementation of the present disclosure. The battery housing 203 may have outer plates 2030. The outer plates 2030 may include the outer surface 2032 and the outer surface 2032 may further include the outer protrusion lines 20321.

In some implementations, with further reference to FIG. 4, the battery housing 303 may include four outer plates 3030 to generate an accommodation space 3031 to be covered by the front plate and the back plate corresponding to battery housing 303. The accommodation space 3031 may be used to accommodate the cell assemblies. In some implementations, the battery housing 303 may include five outer plates 3030 to generate the accommodation space 3031 to be covered by the front plate.

In some implementations, protrusion heights of the outer protrusion lines 20321 located at a left side of the outer surface 2032 may be different from protrusion heights of the outer protrusion lines 20321 located at a right side of the outer surface 2032. In some implementations, each of the outer protrusion lines 20321 located at the left side of the outer surface 2032 may be higher than at least one of the outer protrusion lines 20321 located at the right side of the outer surface 2032. For example, the lowest one of the outer protrusion lines 20321 located at the left side of the outer surface 2032 may be still higher than the lowest one of the outer protrusion lines 20321 located at the right side of the outer surface 2032. In other implementations, each of the outer protrusion lines 20321 located at the left side of the outer surface 2032 may be lower than at least one of the outer protrusion lines 20321 located at the right side of the outer surface 2032.

In some implementations, in FIG. 17, the battery housing 303 may be identical to the battery housing 203. When the battery housing 303 is engaged with the battery housing 203 for coupling two different battery modules to each other, the outer protrusion lines 20321 of the battery housing 203 may be engaged to the outer protrusion lines 30321 of the battery housing 303 for increasing a structural strength between two neighboring battery modules. In some implementations, each of the outer protrusion lines 30321 located at the left side of the outer surface 3032 may be higher than at least one of the outer protrusion lines 20321 located at the right side of the outer surface 2032. In addition, each of the outer protrusion lines 30321 located at the left side of the outer surface 3032 may be slightly higher than a corresponding one of the outer protrusion lines 20321 located at the right side of the outer surface 2032. Thus, each of the outer protrusion lines 30321 located at the left side of the outer surface 3032 may be engaged with a corresponding one of the outer protrusion lines 20321 located at the right side of the outer surface 2032 when the battery housing 303 is engaged with the battery housing 203. In other words, the outer protrusion lines at a side surface may be disposed asymmetrically to the opposite side surface. Thus, when the battery modules are assembled, the outer protrusion lines of adjacent battery modules are staggered so that the distance between the battery modules may be reduced for increasing tightness of a battery system, and then the stability of the battery system may further be enhanced.

In some implementations, with reference to FIG. 16C and FIG. 17, the front plate 201 may couple to the battery housing 203 to generate the battery enclosure 200 having the plurality of enclosure protrusion lines. Thus, the enclosure protrusion lines of the battery enclosure 200 may also be removably coupled to other enclosure protrusion lines of another battery enclosure having the battery housing 303 for coupling the battery module 20 to another battery module having another battery enclosure.

In some implementations, the battery housings 203 and 303 may be stacked upon each other. Thus, each of the outer protrusion lines 20321 located at the top of the outer surface 2032 may slightly misalign with a corresponding one of the outer protrusion lines 20321 located at the bottom of the outer surface 2032. In addition, each of the outer protrusion lines 30321 located at the top of the outer surface 3032 may slightly misalign with a corresponding one of the outer protrusion lines 30321 located at the bottom of the outer surface 3032. In some implementations, the outer protrusion lines 20321 located at the top of the outer surface 2032 may be engaged with the outer protrusion lines 30321 located at the bottom of the outer surface 3032 when the battery housing 303 is installed neighboring the battery housing 203.

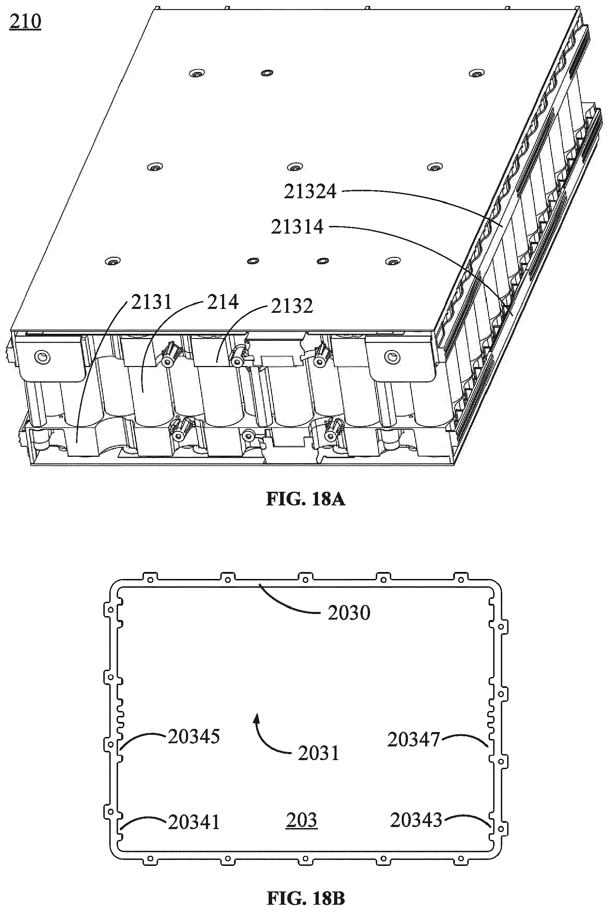

FIG. 18A illustrates a perspective view of a cell assembly according to an implementation of the present disclosure. FIG. 18B illustrates a front view of the battery housing illustrated in FIG. 16B according to an implementation of the present disclosure. Comparing the cell assembly 210 in FIG. 18A with the cell assembly 210 in FIG. 5, the monitoring member 215 is removed only for clearly illustrating the bottom cell holder 2131 and the top cell holder 2132.

In some implementations, the cell assembly 210 may include the bottom cell holder 2131 and the top cell holder 2132. In addition, the bottom cell holder 2131 may further include a plurality of bottom rib members 21314 and the top cell holder 2132 may further include a plurality of top rib members 21324. In some implementations, there may be two bottom rib members 21314 each respectively located at one of two lateral surfaces of the bottom cell holder 2131, and there may be two top rib members 21324 each respectively located at one of two lateral surfaces of the top cell holder 2132.

In some implementations, the accommodation space 2031 of the battery housing 203 may include an upper region and a lower region. In some implementations, with reference to FIG. 10, the cell assembly 210 may be inserted into the lower region, and the cell assembly 220 may be inserted into the upper region. In some implementations, the lower region of the accommodation space 2031 may include a plurality of railways. In FIG. 18B, the number of the railways in the lower region of the accommodation space 2031 may be equal to four. In some implementations, the railways 20341 and 20343 may be located at the same height, and the railways 20345 and 20347 may be located at the same height. In addition, a height difference between the railways 20341 and 20345 may be identical to a height difference between the bottom cell holder 2131 and the top cell holder 2132. Thus, each of the railways 20341, 20343, 20345, and 20347 in the lower regions of the accommodation space 2031 may correspond to one of the bottom rib members 21314 and the top rib members 21324 of the cell assembly 210. In some implementations, with further reference to FIG. 12, each of the railways in the upper region of the accommodation space 2031 may also correspond to one of the bottom rib members and the top rib members 22324 of the cell assembly 220.

In some implementations, the two bottom rib members 21314 may be inserted into the corresponding two railways 20341 and 20343 and the two rib members 20324 may be inserted into the corresponding two railways 20345 and 20347, when the cell assembly 210 is inserted into accommodation space 2031 of the battery housing 203. In some implementations, two bottom rib members may be inserted into two bottom railways in the upper region of the accommodation space 2031 and two top rib members 22324 may be inserted into two top railways in the upper region of the accommodation space 2031, when the cell assembly 220 is inserted into accommodation space 2031 of the battery housing 203.

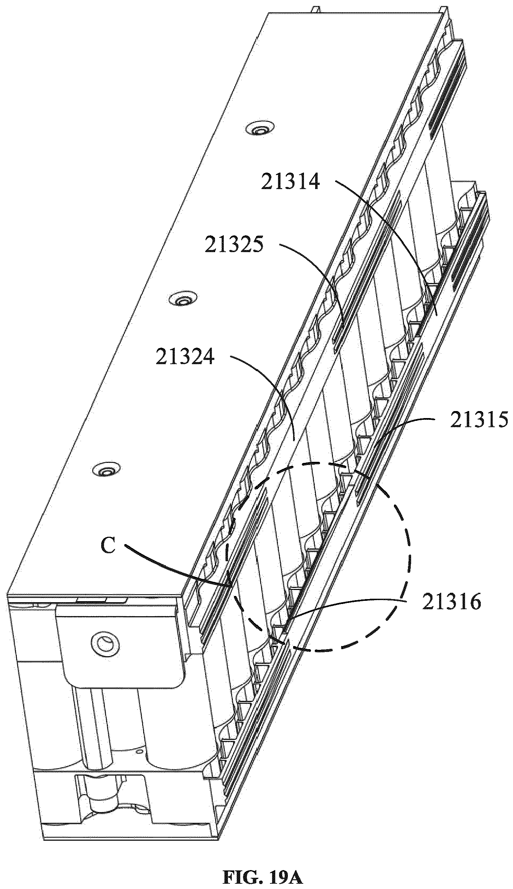

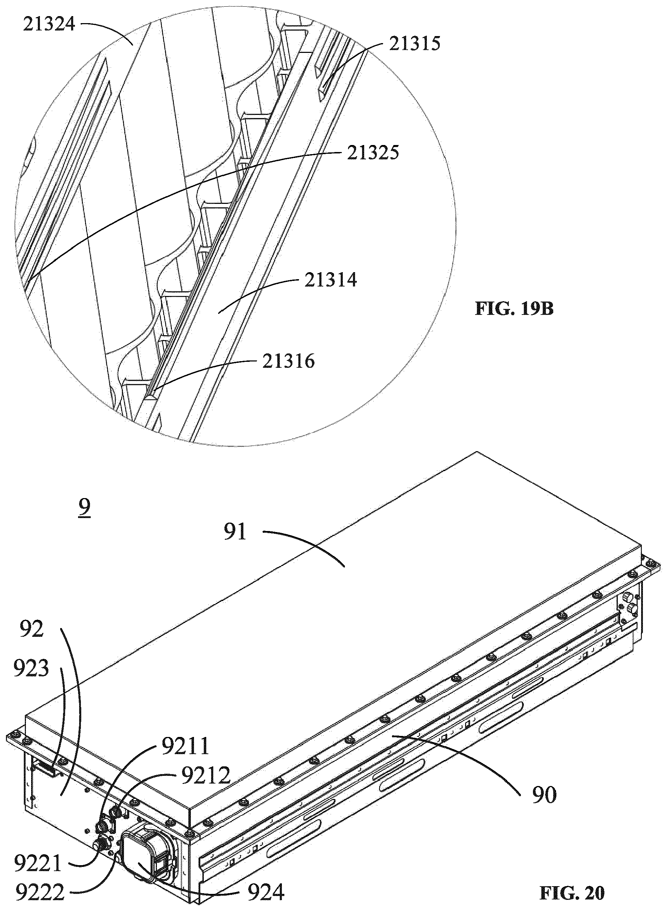

FIG. 19A illustrates a partial enlarged view of the right side of the cell assembly illustrated in FIG. 18A according to an implementation of the present disclosure. FIG. 19B illustrates an enlarged view of a region C illustrated in FIG. 19A according to an implementation of the present disclosure.

In some implementations, the bottom rib member 21314 may further include a plurality of bottom lateral protrusions 21315 and a plurality of bottom vertical protrusions 21316. In addition, the top rib member 21324 may further include a plurality of top lateral protrusions 21325 and a plurality of top vertical protrusions (not shown). In some implementations, the bottom vertical protrusions 21316 may protrude upward from the bottom rib member 21314 and the top vertical protrusions may protrude downward from the top rib member 21324. In addition, with reference to FIG. 18B, the bottom lateral protrusions 21315 may protrude from the bottom rib member 21314 toward the railway 20343 and the top lateral protrusions 21325 may protrude from the top rib member 21324 toward the railway 20347.

In some implementations, with reference to FIG. 18A, the left side of the bottom cell holder 2131 and top cell holder 2132 may also include the bottom lateral protrusions, the bottom vertical protrusions, the top lateral protrusions, and the top vertical protrusions. In some implementations, the bottom lateral protrusions 21315 at the right side of the bottom cell holder 2131 and the bottom lateral protrusions at the left side of the bottom cell holder 2131 may provide a force in a lateral direction to introduce a lateral interference fit between the bottom cell holder 2131 of the cell assembly 210 and the railways 20341 and 20343 of the battery housing 203 when the cell assembly 210 is inserted into the battery housing 203. In addition, the top lateral protrusions 21325 at the right side of the top cell holder 2132 and the bottom lateral protrusions at the left side of the bottom cell holder 2131 may also provide a force in the lateral direction to introduce a lateral interference fit between the top cell holder 2132 of the cell assembly 210 and the railways 20345 and 20347 of the battery housing 203 when the cell assembly 210 is inserted into the battery housing 203. The bottom lateral protrusions and the top lateral protrusions may include a gradually increasing thickness along an increasing direction. The increasing direction may be perpendicular to the lateral direction. In some implementations, the cell assembly 210 may be inserted along an inserting direction for assembling into the battery module 20. In the implementation, the increasing direction of the gradually increasing thickness may be opposite to the inserting direction. Thus, the lateral interference fit between the bottom cell holder 2131 and top cell holder 2132 of the cell assembly 210 and the railways 20341, 20343, 20345, and 20347 of the battery housing 203 may be increased to enhance the stability of the cell assembly 210 when the cell assembly 210 is inserted into the battery housing 203.

In some implementations, the bottom vertical protrusions 21316 may provide a force in a vertical direction to introduce an interference fit between the bottom cell holder 2131 of the cell assembly 210 and the railway 20343 of the battery housing 203, and the top vertical protrusions at the right side of the top cell holder 2132 may provide a force in the vertical direction to introduce a vertical interference fit between the top cell holder 2132 of the cell assembly 210 and the railway 20347 of the battery housing 203. In addition, the bottom vertical protrusions at the left side of the bottom cell holder 2131 may also provide a force in the vertical direction to introduce an interference fit between the bottom cell holder 2131 of the cell assembly 210 and the railway 20341 of the battery housing 203, and the top vertical protrusions at the left side of the top cell holder 2132 may provide a force in the vertical direction to introduce a vertical interference fit between the top cell holder 2132 of the cell assembly 210 and the railway 20345 of the battery housing 203. The bottom vertical protrusions and the top vertical protrusions may include a gradually increasing thickness along the increasing direction. The increasing direction of the gradually increasing thickness may be perpendicular to the vertical direction and be opposite to the inserting direction. Thus, the vertical interference fit between the bottom cell holder 2131 and top cell holder 2132 of the cell assembly 210 and the railways 20341, 20343, 20345, and 20347 of the battery housing 203 may be increased to enhance the stability of the cell assembly 210 when the cell assembly 210 is inserted into the battery housing 203.

In some implementations, there may be a bottom mounting notch disposed between two neighboring ones of the bottom lateral protrusions 21315, and there may be a top mounting notch disposed between two neighboring ones of the top lateral protrusions 21325. In addition, there may be another bottom mounting notch disposed between two neighboring ones of the bottom vertical protrusions 21316, and there may be another top mounting notch disposed between two neighboring ones of the top vertical protrusions of the bottom rib members 21314. In some implementations, some soft materials may be mounted into the bottom mounting notch and the top mounting notch in order to provide additional friction force to strengthen the structural strength of the assembled battery module 20.

In some implementations, the lateral protrusions and the vertical protrusions may be disposed staggered along the inserting direction. Thus, the lateral and vertical forces from the lateral protrusions and the vertical protrusions may be forced onto the battery housing 203 at a plurality of staggered positions.

FIG. 20 illustrates a perspective view of a battery system 9 according to an implementation of the present disclosure. The battery system 9 may include a system casing 90 and a system cover 91. The system casing 90 may have a side wall 92. The side wall 92 may further include a plurality of casing interfaces, a casing inlet 9221, and a casing outlet 9222. The casing interfaces, the casing inlet 9221 and the casing outlet 9222 are disposed on the side wall 92 of the system casing 90. In some implementations, a distance between the casing inlet 9221 and the casing outlet 9222 may be greater than a quarter of a width of the side wall 92.

In some implementations, the number of the casing interfaces may be equal to a positive integer. For example, the number of the casing interfaces may be equal to two. In some implementations, the casing inlet 9221 may be used for a fluid to flow in the system casing 90, and the casing outlet 9222 may be used for the fluid to flow out of the system casing 90. In addition, the casing interfaces 9211 and 9212 may be coupled to an operation system for supplying power to the operation system or coupled to a power charging device for charging the battery system 9.

In some implementations, the battery system 9 may further include a signal connector 923 and a system switch 924 both disposed on the side wall 92. In some implementations, the signal connector 923 may be coupled to a computing system to receive an operation status of the battery system 9. The operation status may include voltage data, current data, and temperature data of the battery system 9. In some implementations, the system switch 924 may be a Manual Service Disconnect (MSD) switch for allowing a user to disconnect the battery system 9 manually. For example, the system switch 924 may be used to manually adjust the battery system 9 to become an open circuit.

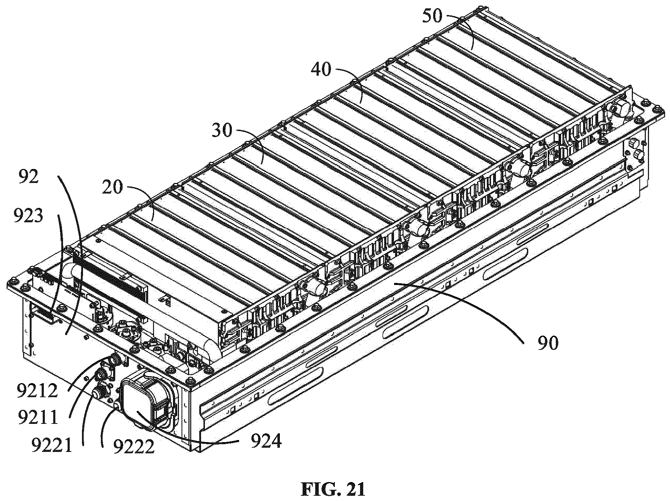

FIG. 21 illustrates a perspective view of the battery system 9, illustrated in FIG. 20, without the system cover 91 according to an implementation of the present disclosure. The battery system 9 may accommodate a plurality of battery modules. In some implementations, the battery modules in the battery system 9 may include the battery module 10 illustrated in FIG. 1, FIG. 2A, FIG. 2B, FIG. 3A, or FIG. 3B. In some implementations, the battery modules in the battery system 9 may include the battery module 20 illustrated in FIG. 4A, FIG. 4B, FIG. 5, or FIG. 7.

In some implementations, the number of the battery modules may be equal to a positive integer. For example, the number of the casing interface may be equal to four. In some implementations, the battery modules 20-50 may be installed along an installation direction. In some implementations, with reference to FIG. 4A, the installation direction may be parallel to the front plate 201 and perpendicular to a normal direction of the front plate 201. In some implementations, the battery modules 20-50 may also be battery devices.

In some implementations, when the fluid flows into the battery system 9 through the casing inlet 9221, the fluid may sequentially flow into the battery modules 20-50 along the installation direction and then flow out of the battery system 9 through the casing outlet 9222. In some implementations, the casing interfaces 9211 and 9212 may be electrically coupled to the battery modules 20-50 for supplying power to the operation system or charging the battery modules 20-50 by the power charging device. In some implementations, the signal connector 923 may be coupled to the battery modules 20-50 for receiving the operation status of the battery modules 20-50.

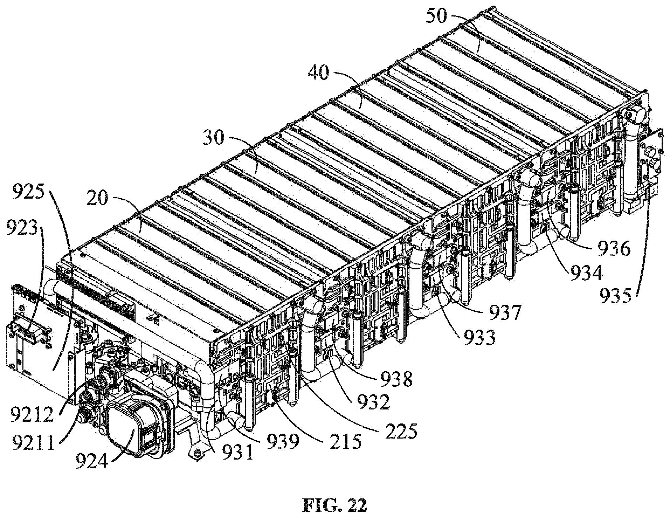

FIG. 22 illustrates a perspective view of a portion of elements in the battery system 9 for illustrating an electrical connection of the battery system illustrated in FIG. 20 according to an implementation of the present disclosure.

In some implementations, the casing interface 9211 may be coupled to a first casing connector 931 for coupling to a first bottom cell assembly in the battery module 20, a second casing connector 932 may be used to couple the first bottom cell assembly to a second bottom cell assembly in the battery module 30, a third casing connector 933 may be used to couple the second bottom cell assembly to a third bottom cell assembly in the battery module 40, a fourth casing connector 934 may be used to couple the third bottom cell assembly to a fourth bottom cell assembly in the battery module 50. In some implementations, a fifth casing connector 935 may be used to couple the fourth bottom cell assembly to a fourth top cell assembly in the battery module 50. In some implementations, a sixth casing connector 936 may be used to couple the fourth top cell assembly to a third top cell assembly in the battery module 40, a seventh casing connector 937 may be used to couple the third top cell assembly to a second top cell assembly in the battery module 30, an eighth casing connector 938 may be used to couple the second top cell assembly to a first top cell assembly in the battery module 20, and the casing interface 9212 may be coupled to a ninth casing connector 939 for coupling to the first top cell assembly.

In some implementations, the system switch 924 disposed on the side wall 92 may be coupled between the casing interface 9212 and the ninth casing connector 939 for allowing a user to disconnect the battery system 9 manually.

In some implementations, the signal connector 923 may be coupled to a computing system to receive an operation status of the battery system 9. The signal connector 923 may be coupled to a monitoring board 925 coupling to the monitoring members of the battery modules 20-50 for receiving the operation status of the battery modules 20-50. For example, with reference to FIG. 10, the monitoring board 925 may be coupled to the monitoring members 215 and 225 of the battery modules 20 to receive the operation status of the cell assemblies 210 and 220 of the battery module 20. In some implementations, the operation status may include voltage data, current data, and temperature data of the battery modules 20-50. In some implementations, the operation status may be monitored by the monitoring members 215 and 225, and the monitoring board 925 may further output data to other systems through the signal connector 923. For example, the monitoring board 925 may output the data to a computer of a vehicle having the battery system 9. In some implementations, the monitoring board 925 may be a battery control unit (BCU).

In some implementations, the battery modules may be stacked upon each other. For example, the battery module 50 may be disposed above the battery module 40, the battery module 40 may be disposed above the battery module 30, and the battery module 30 may be disposed above the battery module 20. In some implementations, the casing interface 9211 may be coupled to the first casing connector 931 for coupling to the first bottom cell assembly, and the casing interface 9212 may be coupled to the ninth casing connector 939 for coupling to the fourth top cell assembly. In some implementations, the second casing connector 932, the fourth casing connector 934, the sixth casing connector 936, and the eighth casing connector 938 may be used to respectively couple the cell assemblies in a corresponding one of the battery modules 20-50. For example, the fourth casing connector 934 may be used to couple the cell assemblies in the battery module 30. In some implementations, the third casing connector 933, the fifth casing connector 935, and the seventh casing connector 937 may be used to respectively couple a top cell assembly in one of the battery modules 20-50 and a bottom cell assembly in another one of the battery modules 20-50 disposed above the one of the battery modules 20-50. For example, the seventh casing connector 937 may be used to couple the top cell assembly in the battery module 40 to the bottom cell assembly in the battery module 50.

In some implementations, in order to decrease lengths of the casing connectors 931-939 for the stacked battery modules, the assembly electrodes of the cell assembly may be disposed on different cell holders of the cell assembly. In some implementations, with reference to FIG. 10, the assembly electrode 2101 may be disposed on the bottom cell holder 2131 to couple to the casing interface 9211, the assembly electrode 2102 may be disposed on the top cell holder 2132 to couple to the assembly electrode 2202 disposed on the bottom cell holder 2231, and the assembly electrode 2201 may be disposed on the top cell holder 2232 to couple to another assembly electrode disposed on another bottom cell holder of the bottom cell assembly in the battery module 30. Thus, the distance between two assembly electrodes coupled to the same casing connector may be decreased and the lengths of the casing connectors may be decreased.

In some implementations, some of the battery modules may be stacked upon each other, and the others of the battery modules may be arranged side-by-side along the installation direction parallel to the front plates of the battery modules and perpendicular to the normal direction of the front plates of the battery modules. Thus, the battery modules may be stacked as a 2×2 cuboid when the number of the battery modules is equal to four. In some implementations, the electrical connection may be coupled as an S-shaped connection. For example, two bottom cell assemblies in different battery modules may be coupled to each other, and then one of the two bottom cell assemblies may further be coupled to the top cell assembly in one of the battery modules.

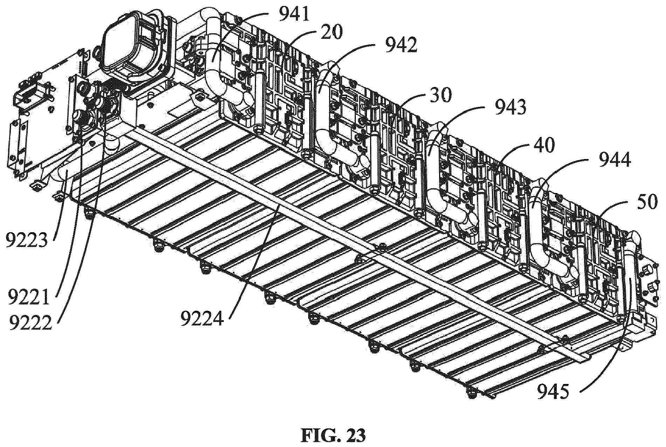

FIG. 23 illustrates a perspective view of a portion of elements in the battery system 9 for illustrating a fluid flow of the battery system 9 illustrated in FIG. 20 according to an implementation of the present disclosure.

In some implementations, the casing inlet 9221 coupled to a fluid cooling thermal management system may be coupled to an input flow pipe 9223 for coupling to a first flow pipe 941 coupled to a first fluid inlet of the battery module 20. In some implementations, a second flow pipe 942 may be used to couple a first fluid outlet of the battery module 20 to a second fluid inlet of battery module 30, a third flow pipe 943 may be used to couple a second fluid outlet of the battery module 30 to a third fluid inlet of battery module 40, and a fourth flow pipe 944 may be used to couple a third fluid outlet of the battery module 20 to a fourth fluid inlet of battery module 50. In some implementations, the casing outlet 9222 coupled to the fluid cooling thermal management system may be coupled to an output flow pipe 9224 for coupling to a fifth flow pipe 945 coupled to a fourth fluid outlet of the battery module 50. In some implementations, with reference to FIG. 20, the input flow pipe 9223 may be disposed in back of the side wall 92, and the output flow pipe 9224 may be disposed below the battery modules 20-50. Thus, each of the fluid inlets and the fluid outlets may be coupled to the fluid cooling thermal management system or another battery module. In other words, the fluid inlets of one battery module may be coupled to the fluid cooling thermal management system or the fluid outlets of another battery module. In some implementations, the input flow pipe 9223, the first flow pipe 941, the second flow pipe 942, the third flow pipe 943, the fourth flow pipe 944, and the output flow pipe 9224 are casing passages for the fluid to flow in the system casing 90.

In some implementations, the battery modules may be stacked upon other. In some implementations, the second flow pipe 942 may be used to couple the first fluid outlet of the battery module 20 to the second fluid inlet of battery module 30 located above the battery module 20, the third flow pipe 943 may be used to couple the second fluid outlet of the battery module 30 to the third fluid inlet of battery module 40 located above the battery module 30, and the fourth flow pipe 944 may be used to couple the third fluid outlet of the battery module 40 to the fourth fluid inlet of battery module 50 located above the battery module 40.

In some implementations, some of the battery modules may be stacked upon each other, and the others of the battery modules may be arranged side-by-side along the installation direction parallel to the front plates of the battery modules and perpendicular to the normal direction of the front plates of the battery modules. Thus, the battery modules may be stacked as a 2×2 cuboid when the number of the battery modules is equal to four. In some implementations, the fluid flow between different battery modules may flow as an S-shaped passage. For example, the second flow pipe 942 may be used to couple the first fluid outlet of the battery module 20 to the second fluid inlet of battery module 30 located in the right side of the battery module 20, the third flow pipe 943 may be used to couple the second fluid outlet of the battery module 30 to the third fluid inlet of battery module 40 located above the battery module 30, and the fourth flow pipe 944 may be used to couple the third fluid outlet of the battery module 40 to the fourth fluid inlet of battery module 50 located in the left side of the battery module 40.

In some implementations, in order to decrease lengths of the flow pipes for the stacked battery modules, locations of the fluid inlet and the fluid outlet of the cell assemblies in a first layer of the battery system 9 may be different from locations of the fluid inlet and the fluid outlet of the cell assemblies in a second layer of the battery system 9. In some implementations, the cell assemblies in the second layer of the battery system 9 may be disposed above the cell assemblies in the first layer of the battery system 9. For example, the fluid inlet of the cell assemblies in the first layer of the battery system 9 may be disposed at a bottom-left corner of a corresponding one of the front plates and the fluid outlet of the cell assemblies in the first layer of the battery system 9 may be disposed at a top-right corner of the corresponding front plate. In addition, the fluid inlet of the cell assemblies in the second layer of the battery system 9 may be disposed at a bottom-right corner of a corresponding one of the front plates to face the fluid outlet of the cell assemblies in the first layer of the battery system 9 or for coupling to another fluid outlet of another cell assembly in the second layer of the battery system 9. Then, the fluid outlet of the cell assemblies in the second layer of the battery system 9 may be disposed at a top-left corner of the corresponding front plate to face the fluid inlet of the cell assemblies in the third layer of the battery system 9 or for coupling to another fluid inlet of another cell assembly in the third layer of the battery system 9. Thus, the distance between the fluid inlet and the fluid outlet in different battery modules may be decreased and the lengths of the flow pipes may be decreased.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A battery module (10-50), comprising:
a battery enclosure (100, 200) comprising:
a front plate (101, 201);
a fluid inlet (151, 251) disposed on the front plate (101, 201) for a fluid to flow into the battery enclosure (100, 200);
a fluid outlet (152, 252) disposed on the front plate (101, 201) for the fluid to flow out of the battery enclosure (100, 200); and
a plurality of enclosure interfaces (1011-1018, 2011-2014) disposed on the front plate (101, 201); and
a plurality of cell assemblies (110-140, 210, 220) each having a plurality of assembly electrodes (1101, 1102, 1201, 1202, 1301, 1302, 1401, 1402, 2101, 2102, 2201, 2202) and installed in the battery enclosure (100, 200), wherein each of the plurality of assembly electrodes (1101, 1102, 1201, 1202, 1301, 1302, 1401, 1402, 2101, 2102, 2201, 2202) is respectively coupled to one of the plurality of enclosure interfaces (1011-1018, 2011-2014) and electrically exposed to an outside of the front plate (101, 201).

2. The battery module (10-50) of claim 1, wherein the battery enclosure (100, 200) further comprises:
one or more flow control members (161-166, 261, 264), each disposed between two of the plurality of cell assemblies (110-140, 210, 220) to control the fluid to flow through a fluid passage between the two of the plurality of cell assemblies (110-140, 210, 220).

3. The battery module (10-50) of claim 2, wherein one of the one or more flow control members (161-166, 261, 264) comprises a sealing member neighboring the front plate (101, 201) to obstruct a front passage (1701, 1703, 1705, 2701) between two neighboring cell assemblies (110-140, 210, 220) of the plurality of cell assemblies (110-140, 210, 220).

4. The battery module (10-50) of claim 3, wherein the front passage (1701, 1703, 1705, 2701) further comprises:
a first front opening (1711, 1731, 1751, 1771, 2711, 2731) neighboring the front plate (101, 201) and located at a lower surface (171, 173, 175, 177, 271, 273) of one of the two neighboring cell assemblies (110-140, 210, 220) of the plurality of cell assemblies (110-140, 210, 220); and
a second front opening (1721, 1741, 1761, 1781, 2721, 2741) corresponding to the first front opening (1711, 1731, 1751, 1771, 2711, 2731) and located at an upper surface (172, 174, 176, 178, 272, 274) of another of the two neighboring cell assemblies (110-140, 210, 220) of the plurality of cell assemblies (110-140, 210, 220), wherein the sealing member covers the first front opening (1711, 1731, 1751, 1771, 2711, 2731) and the second front opening (1721, 1741, 1761, 1781, 2721, 2741) to prevent the fluid from flowing through the front passage (1701, 1703, 1705, 2701) neighboring the front plate (101, 201);
and/or
a first back opening (1712, 1732, 1752, 1772, 2712, 2732) positioned remotely from the front plate (101, 201) and located at a lower surface (171, 173, 175, 177, 271, 273) of one of the two neighboring cell assemblies (110-140, 210, 220) of the plurality of cell assemblies (110-140, 210, 220); and
a second back opening (1722, 1742, 1762, 1782, 2722, 2742) facing the first back opening (1712, 1732, 1752, 1772, 2712, 2732) and located at an upper surface (172, 174, 176, 178, 272,274) of another of the two neighboring cell assemblies (110-140, 210, 220) of the plurality of cell assemblies (110-140, 210, 220), wherein the sealing member is remotely positioned from the first back opening (1712, 1732, 1752, 1772, 2712, 2732) and the second back opening (1722, 1742, 1762, 1782, 2722, 2742) to allow the fluid to flow through the fluid passage positioned remotely from the front plate (101, 201).

5. The battery module (10-50) of claim 3 or 4, wherein the sealing member comprises a stopper disposed on the front plate (101, 201) to obstruct the front passage (1701, 1703, 1705, 2701) between the two neighboring cell assemblies (110-140, 210, 220) of the plurality of cell assemblies (110-140, 210, 220) and/or wherein the sealing member comprises a bulkhead member inserted into the battery enclosure (100, 200) to obstruct the front passage (1701, 1703, 1705, 2701) between the two neighboring cell assemblies (110-140, 210, 220) of the plurality of cell assemblies (110-140, 210, 220).

6. The battery module (10-50) of any one of claims 2 to 5, wherein the battery enclosure (100, 200) further comprises:
a back plate (102, 202) opposite the battery enclosure (100, 200) from the front plate (101, 201), wherein each of the one or more flow control members (161-166, 261, 264) neighbors one of the front plate (101, 201) and the back plate (102, 202) and is positioned remotely from another of the front plate (101, 201) and the back plate (102, 202), preferably wherein:
one of the plurality of cell assemblies (110-140, 210, 220) is sandwiched between two neighboring flow control members (161-166, 261, 264) of the one or more flow control members (161-166, 261, 264) when a number of the one or more flow control members (161-166, 261, 264) is greater than one; and
one of the two neighboring flow control members (161-166, 261, 264) of the one or more flow control members (161-166, 261, 264) neighbors the front plate (101, 201) when another of the two neighboring flow control members (161-166, 261, 264) of the one or more flow control members (161-166, 261, 264) neighbors the back plate (102, 202).

7. The battery module (10-50) of any one of claims 2 to 6, wherein:
one of the one or more flow control members (161-166, 261, 264) is a bulkhead member inserted between two neighboring cell assemblies (110-140, 210, 220) of the plurality of cell assemblies (110-140, 210, 220) for separating the two neighboring cell assemblies (110-140, 210, 220) of the plurality of cell assemblies (110-140, 210, 220) from each other; and
the fluid passage remains unobstructed by a bulkhead opening (1641, 1651, 1661, 2641) of the bulkhead member for the fluid to flow from one of the two neighboring cell assemblies (110-140, 210, 220) of the plurality of cell assemblies (110-140, 210, 220) to another of the two neighboring cell assemblies (110-140, 210, 220) of the plurality of cell assemblies (110-140, 210, 220) through the bulkhead opening (1641, 1651, 1661, 2641), preferably wherein the battery enclosure (100, 200) further comprises:
a back plate (102, 202) opposite the battery enclosure (100, 200) from the front plate (101, 201), wherein the bulkhead opening (1641, 1651, 1661, 2641) of the bulkhead member is positioned remotely from the front plate (101, 201) and neighbors the back plate (102, 202).

8. The battery module (10-50) of any one of claims 2 to 7, wherein:
a specific one of the plurality of cell assemblies (110-140, 210, 220) is sandwiched between two neighboring flow control members (161-166, 261, 264) of the one or more flow control members (161-166, 261, 264) when a number of the one or more flow control members (161-166, 261, 264) is greater than one;
each of the two neighboring flow control members (161-166, 261, 264) of the one or more flow control members (161-166, 261, 264) includes a bulkhead opening (1641, 1651, 1661, 2641) for the fluid to flow through the bulkhead opening (1641, 1651, 1661, 2641); and
the bulkhead opening (1641, 1651, 1661, 2641) of one of the two neighboring flow control members (161-166, 261, 264) of the one or more flow control members (161-166, 261, 264) neighbors the front plate (101, 201) when the bulkhead opening (1641, 1651, 1661, 2641) of another of the two neighboring flow control members (161-166, 261, 264) of the one or more flow control members (161-166, 261, 264) is positioned remotely from the front plate (101, 201).

9. The battery module (10-50) of any preceding claim, wherein:
the plurality of enclosure interfaces (1011-1018, 2011-2014) comprises a plurality of interface holes on the front plate (101, 201); and
each of the plurality of assembly electrodes (1101, 1102, 1201, 1202, 1301, 1302, 1401, 1402, 2101, 2102, 2201, 2202) penetrates respectively through one of the plurality of interface holes to be exposed to the outside of the front plate (101, 201).

10. The battery module (10-50) of any preceding claim, wherein:
the plurality of enclosure interfaces (1011-1018, 2011-2014) comprises a plurality of connector interfaces on the front plate (101, 201); and
each of the plurality of assembly electrodes (1101, 1102, 1201, 1202, 1301, 1302, 1401, 1402, 2101, 2102, 2201, 2202) is electronically coupled to one of the plurality of connector interfaces.

11. The battery module (10-50) of any preceding claim, wherein each of the plurality of enclosure interfaces (1011-1018, 2011-2014) is respectively coupled to at least one of the plurality of assembly electrodes (1101, 1102, 1201, 1202, 1301, 1302, 1401, 1402, 2101, 2102, 2201, 2202), preferably wherein:
a specific one of the plurality of enclosure interfaces (1011-1018, 2011-2014) further includes more than one interface region, when the specific one of the plurality of enclosure interfaces (1011-1018, 2011-2014) is coupled to more than one of the plurality of assembly electrodes (1101, 1102, 1201, 1202, 1301, 1302, 1401, 1402, 2101, 2102, 2201, 2202); and
each of the more than one interface region is coupled to one of the more than one of the plurality of assembly electrodes (1101, 1102, 1201, 1202, 1301, 1302, 1401, 1402, 2101, 2102, 2201, 2202).

12. The battery module (10-50) of any preceding claim, wherein each of the plurality of cell assemblies (110-140, 210, 220) further comprises a monitoring member (215, 225) having a first wiring member and a second wiring member (2251, 2252), wherein the first wiring member and the second wiring member (2251, 2252) are respectively coupled to one of a top cell holder (2132, 2232) and a bottom cell holder (2131, 2231) supporting a plurality of battery cells (114, 124, 134, 144, 214, 224) in the plurality of cell assemblies (110-140, 210, 220).

13. A battery device (10-50), comprising:
a battery housing (203, 303);
a plurality of cell assemblies (110-140, 210, 220) each having a plurality of assembly electrodes (1101, 1102, 1201, 1202, 1301, 1302, 1401, 1402, 2101, 2102, 2201, 2202) and installed in the battery housing (203, 303); and
a battery plate (101, 201) coupled to the battery housing (203, 303) to cover the plurality of cell assemblies (110-140, 210, 220) and further comprising:
a plurality of enclosure interfaces (1011-1018, 2011-2014) disposed on an outer surface of the battery plate (101, 201), wherein the plurality of assembly electrodes (1101, 1102, 1201, 1202, 1301, 1302, 1401, 1402, 2101, 2102, 2201, 2202) of the plurality of cell assemblies (110-140, 210, 220) is respectively coupled to one of the plurality of enclosure interfaces (1011-1018, 2011-2014) to be electrically exposed to an outside of the outer surface.

14. The battery device of claim 13, wherein the battery plate (101, 201) further comprising:
a fluid inlet (151, 251) disposed on the outer surface of the battery plate (101, 201) for a fluid to flow into the battery housing (203, 303); and
a fluid outlet (152, 252) disposed on the outer surface of the battery plate (101, 201) for the fluid to flow out of the battery housing (203, 303).

15. A battery system (9), comprising:
a system casing (90) comprising:
a side wall (92);
a casing inlet (9221) disposed on the side wall (92) for a fluid to flow into the system casing (90);
a casing outlet (9222) disposed on the side wall (92) for the fluid to flow out of the system casing (90); and
two casing interfaces (9211, 9212) disposed on the side wall (92); and
a plurality of battery modules (10-50) each including a battery enclosure (100, 200) and a plurality of cell assemblies (110-140, 210, 220), wherein, for each of the plurality of battery modules (10-50):
each of the plurality of cell assemblies (110-140, 210, 220) has a plurality of assembly electrodes (1101, 1102, 1201, 1202, 1301, 1302, 1401, 1402, 2101, 2102, 2201, 2202) and is installed in the battery enclosure (100, 200), wherein the plurality of assembly electrodes (1101, 1102, 1201, 1202, 1301, 1302, 1401, 1402, 2101, 2102, 2201, 2202) is electrically coupled to the two casing interfaces (9211, 9212), and
the battery enclosure (100, 200) comprises:
an outer surface; and
a plurality of enclosure interfaces (1011-1018, 2011-2014) disposed on the outer surface and each coupled to a corresponding one of the plurality of assembly electrodes (1101, 1102, 1201, 1202, 1301, 1302, 1401, 1402, 2101, 2102, 2201, 2202) of the plurality of cell assemblies (110-140, 210, 220).
